(19) Europäisches Patentamt / European Patent Office / Office européen des brevets

(11) **EP 2 633 985 B1**

(12) **EUROPEAN PATENT SPECIFICATION**

(45) Date of publication and mention
of the grant of the patent:
**27.12.2017 Bulletin 2017/52**

(21) Application number: **11836487.6**

(22) Date of filing: **31.10.2011**

(51) Int Cl.:
*B29D 30/08* (2006.01)   *B29C 33/02* (2006.01)
*B29C 35/02* (2006.01)   *B29D 30/58* (2006.01)
*B60C 1/00* (2006.01)   *B60C 11/00* (2006.01)
*B29D 30/06* (2006.01)   *B29D 30/70* (2006.01)

(86) International application number:
**PCT/JP2011/075113**

(87) International publication number:
**WO 2012/057355 (03.05.2012 Gazette 2012/18)**

(54) **METHOD OF PRODUCING TIRE CASING AND TIRE**

VERFAHREN ZUR HERSTELLUNG EINES REIFENMANTELS UND EINES REIFENS

PROCÉDÉ DE PRODUCTION DE CARCASSE DE PNEU ET DE PNEU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.10.2010 JP 2010244778
29.10.2010 JP 2010244777
29.10.2010 JP 2010244781**

(43) Date of publication of application:
**04.09.2013 Bulletin 2013/36**

(73) Proprietor: **Bridgestone Corporation
Tokyo 104-8340 (JP)**

(72) Inventor: **YANAI, Kenjiro
Kodaira-shi
Tokyo 187-8531 (JP)**

(74) Representative: **Lamb, Martin John Carstairs
Marks & Clerk LLP
90 Long Acre
London WC2E 9RA (GB)**

(56) References cited:
**EP-A1- 0 909 788      JP-A- 2002 069 237
JP-A- 2002 069 237      JP-A- 2006 117 099
JP-A- 2009 051 481      JP-A- 2010 006 133
US-A1- 2009 151 839     US-A1- 2010 113 684**

EP 2 633 985 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to a method for producing a tire casing and a tire having improved low-heat-generation property and durability.

Background Art

Heretofore, since the rolling resistance of a tire can be reduced by reducing the heat generation from the entire tire to thereby increase fuel economy, it is desired to lower the heat generation from tires. For lowering the heat generation from tires, compounding the tread rubber composition is mainly improved.

For reducing the rolling resistance mentioned above, some investigations are being made from the aspect of tire structures, and for example, Patent Reference 1 discloses a heavy loading pneumatic tire equipped with a belt composed of at least three rubber-coated cord belt layers and a tread, wherein the belt comprises a cord-crossed layer of two layers adjacent to each other and an outermost belt layer positioned on the outermost side in the tire radial direction, and the angle between the cord of the outermost belt layer and the cord of the belt layer adjacent to the outermost belt layer is defined to fall within a specific range and the inclination angle of the cord of the outermost belt layer to the tire equator is defined to fall within a specific range, whereby the rolling resistance of the heavy loading pneumatic tire is further reduced.

Further, in addition to the rolling resistance reduction mentioned above, highly-durable tire casing members are needed for enabling retreading multiple times, and in consideration of environmental influences, retreading capable of contributing toward resource saving is necessary, and further, another important problem is how to improve the durability of the belt-coating rubber for heavy loading radial tires. For improving the durability of tires, it is desired to improve the cracking resistance of the coating rubber composition for a tire belt layer, and for example, Patent Reference 2 discloses a proposal of improving belt durability by incorporating a bisphenol compound into a belt coating rubber composition to thereby improve the adhesiveness thereof to steel cords and the antiaging property thereof.

Also for improving the durability of tires, it is desired to improve fracture resistance of the coating rubber composition for a tire carcass ply, and for example, Patent Reference 3 discloses a proposal of incorporating a specific compound in a tire carcass ply coating rubber composition relative to 100 parts by mass of the rubber component therein, thereby improving the adhesiveness to steel cords and the fracture resistance thereof to improve the durability of tires.

For increasing the universality of tire production, various tire production methods where tires are vulcanized in two stages are being developed.

For example, Patent Reference 4 proposes a tire production method, wherein the tire forming and vulcanizing step is divided into independent two stages A and B, in the stage A, the tire is so assembled as to comprise at least one carcass layer and at most a part of a tread strip as the outermost layer in the radial direction, and subsequently also the surface is vulcanized in a vulcanization mold capable of imparting a predetermined cross-sectional profile to one or a large number of strength carriers, and in the stage B, the tire part is also similarly vulcanized.

Patent Reference 5 discloses a tire production method, wherein a partial tire is constructed in the step A and the partial tire is subsequently vulcanized, and in the step B, the whole or the remaining part of an unvulcanized tread is added to the partial tire and then vulcanized to give a complete tire, and wherein, in particular, the surface of the whole or the remaining part of the unvulcanized tread is at least partially plasma-treated.

Further, Patent Reference 6 proposes a tire production method, in which a two-stage vulcanization system is employed for passenger car tires, and which comprises a first vulcanization step of integrating a spiral reinforcing layer and a tread and then patterning the tread, and a second vulcanization step of setting the primary vulcanized product obtained in the first vulcanization step in the outer periphery of a radial carcass ply of a casing side member and then vulcanizing and molding it.

However, according to these tire production methods, the heat-generation property of the tire could not be lowered and the durability thereof could not be improved.

Accordingly, it is desired to improve tire production methods from the viewpoint of improving the low-heat-generation property and the durability of tires. US2009/151839 relates to a rubber composition for adhering steel cord for use as a covering composition for steel cords as reinforcing members in tires. EP0909788 teaches a rubber composition for use in various tire members. JP2002069237 teaches a rubber composition suitable for a cushion rubber. US2010/113684 discloses a method of producing a rubber composition from natural rubber latex.

Citation List

Patent References

Patent Reference 1: JP-A 2010-120530
Patent Reference 2: JP-A 2007-211152
Patent Reference 3: JP-A 2009-137541
Patent Reference 4: JP-A 08-258179
Patent Reference 5: JP-A 2000-79640
Patent Reference 6: JP-A 2006-111072

Summary of the Invention

Problems that the Invention is to Solve

Given the situation as above, an object of the present invention is to provide a method for producing a tire casing and a tire having improved low-heat-generation property and durability.

Means for Solving the Problems

For solving the above-mentioned problems, the present inventors have found that, when along with using a tire production method favorably vulcanizing a tire casing and bonding the vulcanized tire casing and a precured tread member together and integrally vulcanizing and molding them, a specific coating rubber composition is used for at least one layer in the belt portion or the carcass ply of the tire, then the problems with the present invention can be solved, and have completed the present invention.
Specifically, the present invention provides the following:

[1] A method for producing a tire casing by vulcanizing a casing portion comprising a belt portion composed of multiple belt layers, a side portion and a bead portion, the method including at least one compounding method selected from the following (a), (b) and (c):

(a) in which carbon black having a nitrogen adsorption specific surface area of from 25 to 99 $m^2$/g as defined in JIS K 6217-2:2001 is incorporated in the coating rubber composition for the outermost belt layer in the belt portion, in an amount of from 30 to 60 parts by mass per 100 parts by mass of the rubber component therein;
(b) in which the belt portion is composed of at least three belt layers, and carbon black having a nitrogen adsorption specific surface area of from 25 to 99 $m^2$/g as defined in JIS K 6217-2:2001 is incorporated in the coating rubber composition for at least one belt layer in the belt portion, in an amount of from 40 to 60 parts by mass per 100 parts by mass of the rubber component therein;
(c) in which the casing portion includes a carcass ply, and carbon black having a nitrogen adsorption specific surface area of from 25 to 90 $m^2$/g as defined in JIS K 6217-2:2001 is incorporated in the coating rubber composition for the carcass ply, in an amount of from 40 to 60 parts by mass per 100 parts by mass of the rubber component therein; and wherein the vulcanization method for the casing portion is a method of surrounding the casing portion from the outside by the use of the vulcanization mold, and the casing portion is vulcanized and molded in such a manner that the bead portion side of the casing portion is heated by a first heating means, the belt portion side of the casing portion is heated by a second heating means, and the quantity of heat per unit volume to be given to the belt portion side by the second heating means is smaller than the quantity of heat per unit volume to be given to the bead portion side by the first heating means;

and
[2] A method for producing a tire by forming a tire casing through vulcanization of a casing portion comprising a belt portion composed of multiple belt layers, a side portion and a bead portion, vulcanizing a tread member having at least a tread portion to form a precured tread member, and thereafter bonding the tire casing and the precured tread member together and integrally vulcanizing and molding them into a tire, the method including at least one compounding method selected from the following (a), (b) and (c):

(a) in which carbon black having a nitrogen adsorption specific surface area of from 25 to 99 $m^2$/g as defined

in JIS K 6217-2:2001 is incorporated in the coating rubber composition for the outermost belt layer in the belt portion, in an amount of from 30 to 60 parts by mass per 100 parts by mass of the rubber component therein; (b) in which the belt portion is composed of at least three belt layers, and carbon black having a nitrogen adsorption specific surface area of from 25 to 99 $m^2$/g as defined in JIS K 6217-2:2001 is incorporated in the coating rubber composition for at least one belt layer in the belt portion, in an amount of from 40 to 60 parts by mass per 100 parts by mass of the rubber component therein; (c) in which the casing portion includes a carcass ply, and carbon black having a nitrogen adsorption specific surface area of from 25 to 90 $m^2$/g as defined in JIS K 6217-2:2001 is incorporated in the coating rubber composition for the carcass ply, in an amount of from 40 to 60 parts by mass per 100 parts by mass of the rubber component therein; and wherein the vulcanization method for the casing portion is a method of surrounding the casing portion from the outside by the use of the vulcanization mold, and the casing portion is vulcanized and molded in such a manner that the bead portion side of the casing portion is heated by a first heating means, the belt portion side of the casing portion is heated by a second heating means, and the quantity of heat per unit volume to be given to the belt portion side by the second heating means is smaller than the quantity of heat per unit volume to be given to the bead portion side by the first heating means.

Advantageous Effects of the Invention

According to the present invention, there is provided a method for producing a tire having improved low-heat-generation property and durability, especially having improved cracking resistance after long-term use. According to the production method of the present invention, the degree of vulcanization of the belt portion and/or the carcass ply inside of the belt portion, and accordingly, the rolling resistance of the tire can be reduced and the cracking resistance thereof after long-term use can be improved more.

Further, according to the production method for a tire casing and a tire of the present invention:

(1) a two-stage vulcanization divided production method is employed, in which a casing portion comprising a belt portion, a side portion and a bead portion is vulcanized to form a tire casing, a tread member comprising at least a tread portion is vulcanized to form a precured tread member, and the tire casing and the precured tread member are bonded together and integrally vulcanized and molded. Different from this, regarding a thick-gauge tire such as a heavy loading tire or the like produced according to conventional one-stage vulcanization, the thermal conductivity of rubber is low, and during vulcanization, the temperature increase in the inside area of the tire is lower than that in the surface area thereof, and the rubber properties of the tire after vulcanization differ between the area around the surface of the tire and the inside area thereof; however, the difference is solved in the tire produced according to the method of the present invention, and the tire can effectively bring out the characteristics that the belt-covering rubber naturally has, and, as a result, the tire has a low-heat-generation property and the cracking resistance thereof after long-term use can be significantly improved.

In addition, in the tire of the present invention, the belt portion is composed of at least three belt layers, and from 40 to 60 parts by mass of carbon black having a nitrogen adsorption specific surface area of from 25 to 90 $m^2$/g is incorporated in the coating rubber composition for at least one belt layer in the belt portion, whereby the above-mentioned properties can be further improved.

(2) In forming a tire casing by vulcanizing the casing portion, the bead portion side of the casing portion is heated in the first stage, and the belt portion side of the casing portion is heated in the second stage, and the vulcanization molding is so controlled that the quantity of heat per unit volume to be imparted to the belt portion side in the second heating step could be smaller than the quantity of heat per unit volume to be imparted to the bead portion side in the first heating step to thereby impart a large quantity of heat to the latest vulcanization point of the bead portion, and consequently, the vulcanization time can be shortened and the vulcanization degree of the belt portion coating rubber composition and/or the carcass ply coating rubber composition can be controlled with ease.

As described above, by producing a tire while the tire casing and the tread portion thereof are separated from each other, it is possible to define the optimum vulcanization condition for the belt portion and/or the carcass ply, and accordingly, there can be provided a method for producing a tire excellent in low-heat-generation property, durability and deterioration resistance.

Brief Description of the Drawings

[Fig. 1] This is a schematic cross-sectional view showing one example of a tire obtained according to the production method of the present invention.

[Fig. 2] This is a schematic cross-sectional view showing another example of a tire obtained according to the production method of the present invention.

[Fig. 3] This is a partly-cut, schematic cross-sectional view showing the belt portion of one example of a tire obtained according to the production method of the present invention.

[Fig. 4] This is a schematic cross-sectional view showing one example of a tire casing and a precured tread member for use in the production method of the present invention.

[Fig. 5] This is a schematic cross-sectional view showing another example of a tire casing and a precured tread member for use in the production method of the present invention.

Mode for Carrying out the Invention

The method for producing a tire casing of the present invention comprises vulcanizing a casing portion comprising a belt portion composed of multiple belt layers, a side portion and a bead portion, and the production method includes at least one compounding method selected from the following (a), (b) and (c):

(a) in which carbon black having a nitrogen adsorption specific surface area of from 25 to 99 m$^2$/g as defined in JIS K 6217-2:2001 is incorporated in the coating rubber composition for the outermost belt layer in the belt portion, in an amount of from 30 to 60 parts by mass per 100 parts by mass of the rubber component therein;

(b) in which the belt portion is composed of at least three belt layers, and carbon black having a nitrogen adsorption specific surface area of from 25 to 99 m$^2$/g as defined in JIS K 6217-2:2001 is incorporated in the coating rubber composition for at least one belt layer in the belt portion, in an amount of from 40 to 60 parts by mass per 100 parts by mass of the rubber component therein;

(c) in which the casing portion includes a carcass ply, and carbon black having a nitrogen adsorption specific surface area of from 25 to 90 m$^2$/g as defined in JIS K 6217-2:2001 is incorporated in the coating rubber composition for the carcass ply, in an amount of from 40 to 60 parts by mass per 100 parts by mass of the rubber component therein.

The method for producing a tire of the present invention comprises forming a tire casing through vulcanization of a casing portion comprising a belt portion composed of multiple belt layers, a side portion and a bead portion, vulcanizing a tread member having at least a tread portion to form a precured tread member, and thereafter bonding the tire casing and the precured tread member together and integrally vulcanizing and molding them into a tire, and the production method includes at least one compounding method selected from the following (a), (b) and (c) :

(a) in which carbon black having a nitrogen adsorption specific surface area of from 25 to 99 m$^2$/g as defined in JIS K 6217-2:2001 is incorporated in the coating rubber composition for the outermost belt layer in the belt portion, in an amount of from 30 to 60 parts by mass per 100 parts by mass of the rubber component therein;

(b) in which the belt portion is composed of at least three belt layers, and carbon black having a nitrogen adsorption specific surface area of from 25 to 99 m$^2$/g as defined in JIS K 6217-2:2001 is incorporated in the coating rubber composition for at least one belt layer in the belt portion, in an amount of from 40 to 60 parts by mass per 100 parts by mass of the rubber component therein;

(c) in which the casing portion includes a carcass ply, and carbon black having a nitrogen adsorption specific surface area of from 25 to 90 m$^2$/g as defined in JIS K 6217-2:2001 is incorporated in the coating rubber composition for the carcass ply, in an amount of from 40 to 60 parts by mass per 100 parts by mass of the rubber component therein.

The first to third aspects of the production method for a tire casing or a tire of the present invention are described below sequentially.

The first aspect of the production method for a tire casing of the present invention comprises vulcanizing a casing portion comprising a belt portion composed of multiple belt layers, a side portion and a bead portion, wherein carbon black having a nitrogen adsorption specific surface area of from 25 to 99 m$^2$/g as defined in JIS K 6217-2:2001 is incorporated in the coating rubber composition for the outermost belt layer in the belt portion, in an amount of from 30 to 60 parts by mass per 100 parts by mass of the rubber component therein.

The first aspect of the production method for a tire of the present invention comprises forming a tire casing through vulcanization of a casing portion comprising a belt portion composed of multiple belt layers, a side portion and a bead portion, vulcanizing a tread member having at least a tread portion to form a precured tread member, and thereafter bonding the tire casing and the precured tread member together and integrally vulcanizing and molding them into a tire, wherein carbon black having a nitrogen adsorption specific surface area of from 25 to 99 m$^2$/g as defined in JIS K 6217-2:2001 is incorporated in the coating rubber composition for the outermost belt layer in the belt portion, in an amount of from 30 to 60 parts by mass per 100 parts by mass of the rubber component therein.

The carbon black must have a nitrogen adsorption specific surface area of from 25 to 99 $m^2$/g. This is because, when at least 25 $m^2$/g, then the coating rubber composition can secure the strength, and when at most 99 $m^2$/g, then the low-heat-generation property and the fatigue resistance of the coating rubber composition can be good; and when falling within the range, the low-heat-generation property and the durability of the tire can be bettered. From the viewpoint of placing more value on the low-heat-generation property, the nitrogen adsorption specific surface area is more preferably from 25 to 90 $m^2$/g; from the viewpoint of placing more value on the durability, the nitrogen adsorption specific surface area is more preferably from 33 to 99 $m^2$/g; and from the viewpoint of bettering both the low-heat-generation property and the durability, the nitrogen adsorption specific surface area is more preferably from 33 to 90 $m^2$/g.

The amount of the carbon black to be incorporated must be from 30 to 60 parts by mass. This is because, when at least 30 parts by mass, then the coating rubber composition can secure the strength, and when at most 60 parts by mass, then the low-heat-generation property and the fatigue resistance of the coating rubber composition can be good; and when falling within the range, the low-heat-generation property and the durability of the tire can be bettered. From these viewpoints, the amount of the carbon black to be incorporated is more preferably from 35 to 60 parts by mass.

The second aspect of the method for producing a tire casing of the present invention comprises vulcanizing a casing portion comprising a belt portion composed of at least three belt layers, a side portion and a bead portion, wherein carbon black having a nitrogen adsorption specific surface area of from 25 to 99 $m^2$/g as defined in JIS K 6217-2:2001 is incorporated in the coating rubber composition for at least one belt layer in the belt portion, in an amount of from 40 to 60 parts by mass per 100 parts by mass of the rubber component.

The second aspect of the method for producing a tire of the present invention comprises forming a tire casing through vulcanization of a casing portion comprising a belt portion composed of at least three belt layers, a side portion and a bead portion, vulcanizing a tread member having at least a tread portion to form a precured tread member, and thereafter bonding the tire casing and the precured tread member together and integrally vulcanizing and molding them into a tire, wherein carbon black having a nitrogen adsorption specific surface area of from 25 to 99 $m^2$/g as defined in JIS K 6217-2:2001 is incorporated in the coating rubber composition for at least one belt layer in the belt portion, in an amount of from 40 to 60 parts by mass per 100 parts by mass of the rubber component therein.

The carbon black must have a nitrogen adsorption specific surface area of from 25 to 99 $m^2$/g. This is because, when at least 25 $m^2$/g, then the coating rubber composition can secure the strength, and when at most 99 $m^2$/g, then the low-heat-generation property and the fatigue resistance of the coating rubber composition can be good; and when falling within the range, the low-heat-generation property and the durability of the tire can be bettered. From these viewpoints, the nitrogen adsorption specific surface area is more preferably from 33 to 99 $m^2$/g, even more preferably from 33 to 90 $m^2$/g.

The amount of the carbon black to be incorporated must be from 40 to 60 parts by mass. This is because, when at least 40 parts by mass, then the coating rubber composition can secure the strength, and when at most 60 parts by mass, then the low-heat-generation property and the fatigue resistance of the coating rubber composition can be good; and when falling within the range, the low-heat-generation property and the durability of the tire can be bettered. From these viewpoints, the amount of the carbon black to be incorporated is more preferably from 45 to 60 parts by mass.

In the second aspect of the method for producing a tire of the present invention, preferably, the above-mentioned coating rubber composition is used for the innermost belt layer in the tire radial direction of those at least three belt layers in the belt portion.

The third aspect of the method for producing a tire casing of the present invention comprises vulcanizing a casing portion comprising a belt portion composed of multiple belt layers, a carcass ply, a side portion and a bead portion, wherein carbon black having a nitrogen adsorption specific surface area of from 25 to 90 $m^2$/g as defined in JIS K 6217-2 :2001 is incorporated in the coating rubber composition for the carcass ply, in an amount of from 40 to 60 parts by mass per 100 parts by mass of the rubber component therein.

The third aspect of the method for producing a tire of the present invention comprises forming a tire casing through vulcanization of a casing portion comprising a belt portion composed of multiple belt layers, a carcass ply, a side portion and a bead portion, vulcanizing a tread member having at least a tread portion to form a precured tread member, and thereafter bonding the tire casing and the precured tread member together and integrally vulcanizing and molding them into a tire, wherein carbon black having a nitrogen adsorption specific surface area of from 25 to 90 $m^2$/g as defined in JIS K 6217-2 :2001 is incorporated in the coating rubber composition for the carcass ply, in an amount of from 40 to 60 parts by mass per 100 parts by mass of the rubber component therein.

The carbon black must have a nitrogen adsorption specific surface area of from 25 to 90 $m^2$/g. This is because, when at least 25 $m^2$/g, then the coating rubber composition can secure the strength, and when at most 90 $m^2$/g, then the low-heat-generation property and the fatigue resistance of the coating rubber composition can be good; and when falling within the range, the low-heat-generation property and the durability of the tire can be bettered. From these viewpoints, the nitrogen adsorption specific surface area is more preferably from 33 to 90 $m^2$/g.

The amount of the carbon black to be incorporated must be from 40 to 60 parts by mass. This is because, when at least 40 parts by mass, then the coating rubber composition can secure the strength, and when at most 60 parts by mass, then the low-heat-generation property and the fatigue resistance of the coating rubber composition can be good; and when falling within the range, the low-heat-generation property and the durability of the tire can be bettered.

The vulcanization method in the tire production method of the present invention may be hereinafter referred to as "2-stage vulcanization". The conventional method of vulcanizing a raw tire at a time may be hereinafter referred to as "one-stage vulcanization".

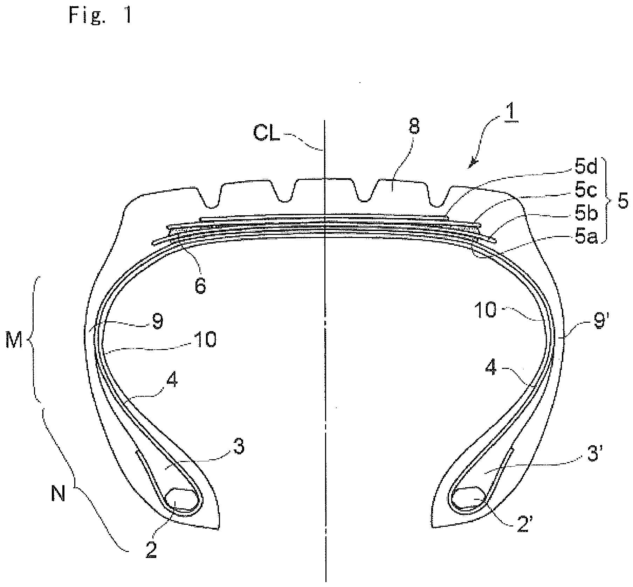

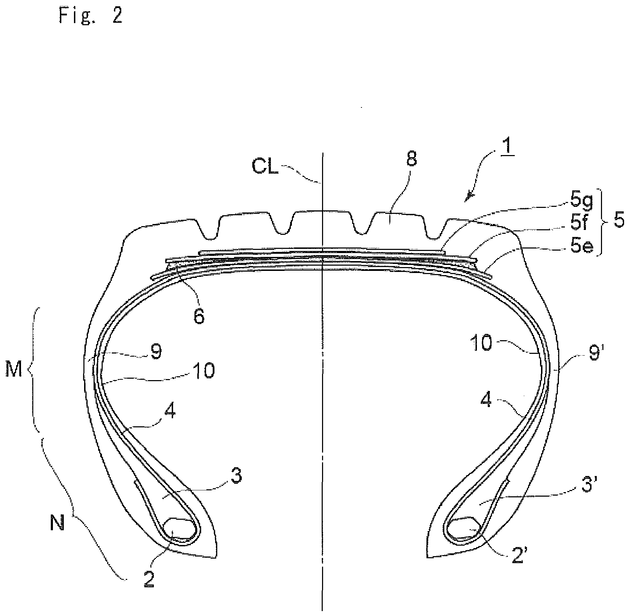

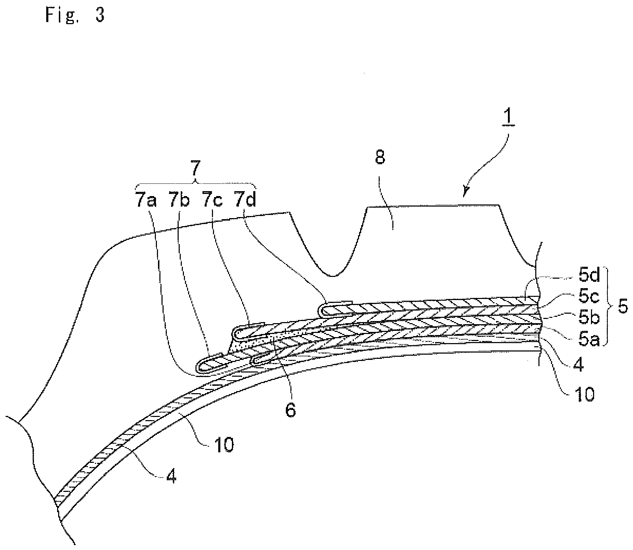

The members of the tire in the first to third aspects of the production method for a tire casing or a tire of the present invention are described below. Fig. 1 is a schematic cross-sectional view showing one example of the tire to be obtained according to the first or third aspect of the production method of the present invention; Fig. 2 is a schematic cross-sectional view showing one example of the tire to be obtained according to the second aspect of the production method of the present invention; Fig. 3 is a partially-cut schematic cross-sectional view showing the belt portion of one example of the tire to be obtained according to the first aspect of the production method of the present invention.

In the example of the tire 1, stiffeners 3 and 3' extend outside in the tire radial direction from a pair of bead cores 2 and 2', respectively, and a belt portion 5 comprising multiple belt layers (four layers of 5a to 5d in Fig. 1, and three layers of 5e to 5g in Fig. 2) is arranged outside in the tire radial direction of the carcass ply 4 that is folded from the bead core 2 outside the stiffener 3 to form a toroidal tire casing form, folded at the bead core 2' on the opposite side and fixed outside the stiffener 3'. A tread portion 8 is arranged outside in the tire radial direction of the belt portion 5.

Outside the carcass ply 4 and between the tread portion 8 and the stiffener 3, arranged is a Sidewall rubber 9. The portion where the Sidewall rubber 9 is arranged is referred to as a side portion M, and the inside portion in the tire radial direction of the Sidewall M is referred to as a bead portion N. In the bead portion N, arranged are the bead cores 2 and 2', the stiffeners 3 and 3', etc. Inside the carcass ply 4, arranged is an inner liner 10 serving as an air penetration-preventing layer.

The belt portion 5 is further described in detail. In Fig. 1 and Fig. 3, in the belt layers 5a to 5d (an innermost belt layer 5a, an inside belt layer 5b to form a crossing layer, an outside belt layer 5c to form a crossing layer, and an outermost belt layer 5d), in general, a belt wedge rubber 6 is arranged between the vicinity of the end of the inside belt layer 5b to form a crossing layer and the vicinity of the end of the outside belt layer 5c to form a crossing layer, and at the end of each of the belt layers 5a to 5d, arranged is a belt end cover rubber 7 (7a to 7d) to cover the end of each layer. The belt portion 5 includes the belt wedge rubber 6 and the bend end cover rubber 7.

The belt layers 5a to 5d in the belt portion 5 shown in Fig. 1 and Fig. 3 are all composed of a reinforcing material (especially steel cord) and a coating rubber composition to coat it.

In the belt layers 5e to 5g shown in Fig. 2, in general, a belt wedge rubber 6 is arranged between the vicinity of the end of the belt layer 5e to form a crossing layer and the vicinity of the end of the layer 5f, and at the end of each of the belt layers 5e to 5g, arranged is a belt end cover rubber 7 (not shown, but having the same configuration as in Fig. 3) to cover the end of each layer. The belt portion includes the belt wedge rubber 6 and the bend end cover rubber 7.

The carcass ply 4 shown in Figs. 1 and 2 is composed of a reinforcing material (especially steel cod) and a coating rubber composition.

The center line CL of the tire cross-sectional view shown in Figs. 1, 2, 4 and 5 is referred to as a crown center.

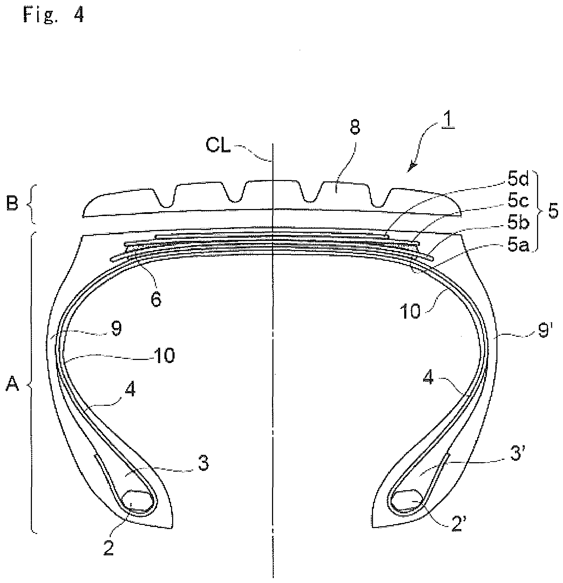

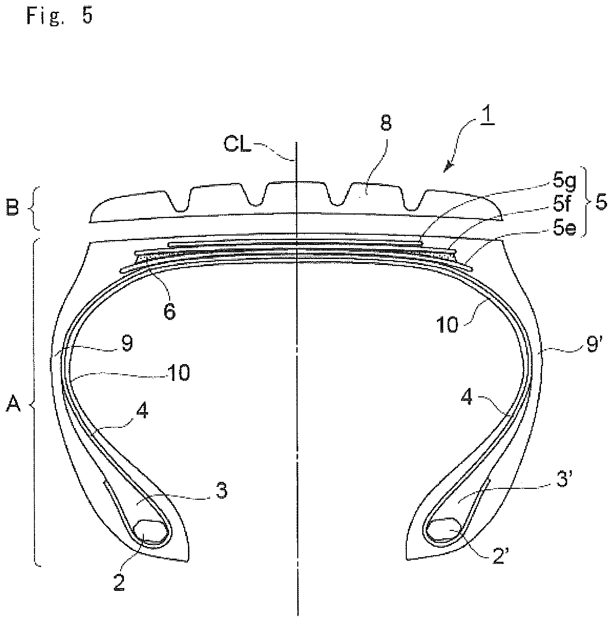

Figs. 4 and 5 are schematic cross-sectional views each showing an example of a tire casing A and a precured tread member B in the first to third aspects of the production method for a tire casing or a tire of the present invention (hereinafter this may be abbreviated as the production method of the present invention). In the present invention, the casing portion comprising at least a belt portion 5, a side portion M and a bead portion N is cured to form the tire casing A. In general, in the tire casing A, there is arranged a thin layer of a part of tread rubber outside in the tire radial direction of the belt portion 5. This is for bettering the bonding of the tire casing to the precured tread member B.

[Coating Rubber Composition for Outermost Belt Layer 5d]

In the first aspect of the production method of the present invention, the configuration of the belt portion 5 is not defined, but in case where the belt portion is composed of four belt layers 5a to 5d, it is desirable that the belt portion is composed of the innermost belt layer 5a, the inside belt layer 5b to form a crossing layer, the outside belt layer 5c to form a crossing layer, and the outermost belt layer 5d.

[Coating Rubber Composition for Innermost Belt Layer 5e]

As shown in Fig. 2 and Fig. 5, the innermost belt layer 5e in the second aspect of the production method of the present invention preferably forma a crossing layer with the overlying layer, the belt layer 5f. In the present invention, it is important to improve the cracking resistance after long-term use of the coating rubber composition. Preferably, the above-mentioned coating rubber composition is used as the coating rubber composition for all the belt layers 5e to 5g, but may be used for any one of those layers . As described above, it is especially desirable to use the composition as the above-mentioned crossing layer. Here the crossing layer is also referred to as a cord crossing layer, which is such that between the adjacent two layers, the cords are arranged in different directions relative to the equatorial plane of the tire therebetween, and means a gradient belt layer having a mutually crossing cord arrangement.

[Coating Rubber Composition for Carcass Ply 4]

The carcass ply 4 in the third aspect of the production method of the present invention forms a toroidal tire casing form, and is an important member in order that the tire can function as a pressure tight case. Improving the cracking resistance after long-term use of the coating rubber composition for the carcass ply 4 is important for improving the durability of the tire. In pneumatic radial tires for vans, large-sized vehicles (for trucks, buses, construction vehicles, etc.) and others, in general, the carcass ply is composed of a reinforcing material of steel cords and a coating rubber composition, and improving the cracking resistance of the tire shoulder portion and the carcass ply edge is important.

(Carbon Black)

As the carbon black having a nitrogen adsorption specific surface area of from 25 to 99 $m^2$/g as defined in JIS K 6217-2 :2001 that is used in the coating rubber composition for the outermost belt layer 5d in the first aspect of the production method of the present invention, the carbon black having a nitrogen adsorption specific surface area of from 25 to 99 $m^2$/g as defined in JIS K 6217-2:2001 that is used in the coating rubber composition for the innermost belt layer 5e in the second aspect, or the carbon black having a nitrogen adsorption specific surface area of from 25 to 90 $m^2$/g as defined in JIS K 6217-2:2001 that is used in the coating rubber composition for the carcass ply 4 in the third aspect, for example, there are mentioned HAF (nitrogen adsorption specific surface area: 75 to 80 $m^2$/g), HS-HAF (nitrogen adsorption specific surface area: 78 to 83 $m^2$/g), LS-HAF (nitrogen adsorption specific surface area: 80 to 85 $m^2$/g), FEF (nitrogen adsorption specific surface area: 40 to 42 $m^2$/g), GPF (nitrogen adsorption specific surface area: 26 to 28 $m^2$/g), SRF (nitrogen adsorption specific surface area: 25 to 28 $m^2$/g), N339 (nitrogen adsorption specific surface area: 88 to 96 $m^2$/g), LI-HAF (nitrogen adsorption specific surface area: 73 to 75 $m^2$/g), IISAF (nitrogen adsorption specific surface area: 97 to 98 $m^2$/g), HS-IISAF (nitrogen adsorption specific surface area: 98 to 99 $m^2$/g), etc. Of those, preferred are HAF, HS-HAF, LS-HAF, FEF, LI-HAF and GPE.

(Silica)

In addition to carbon black, if desired, silica may be incorporated in the coating rubber composition for the outermost belt layer 5d in the first aspect of the production method of the present invention, or the coating rubber composition for the innermost belt layer 5e in the second aspect, or the coating rubber composition for the carcass ply 4 in the third aspect. Preferably, silica is incorporated in an amount of at most 10 parts by mass per 100 parts by mass of the rubber component in the coating rubber composition.
Any commercially-available silica is usable here, but above all, preferred is precipitated silica, fumed silica or colloidal silica, and more preferred is precipitated silica. Preferably, the BET specific surface area (as measured according to ISO 5794/1) of silica for use herein is from 40 to 350 $m^2$/g. Silica of which the BET specific surface area falls within the range is advantageous in that it satisfies both rubber-reinforcing capability and dispersibility in the rubber component. From this viewpoint, silica of which the BET specific surface area falls within a range of from 80 to 350 $m^2$/g is more preferred; silica of which the BET specific surface area falls within a range of from 120 to 350 $m^2$/g is even more preferred. As silicas of those types, usable here are commercial products of Tosoh Silica's trade names "Nipsil AQ" (BET specific surface area = 220 $m^2$/g) and "Nipsil KQ"; Degussa's trade name "Ultrasil VN3" (BET specific surface area = 175 $m^2$/g), etc.

(Rubber Component)

As the rubber component for use in the coating rubber composition for the outermost belt layer 5d in the first aspect of the production method of the present invention, or the coating rubber composition for the innermost belt layer 5e in the second aspect, or the coating rubber composition for the carcass ply 4 in the third aspect, preferred is natural rubber and/or synthetic polyisoprene rubber (IR), and more preferred is natural rubber. In combined use with any other synthetic rubber, it is desirable that natural rubber accounts for at least 60% by mass of the rubber component, more preferably at least 70% by mass, even more preferably at least 80% by mass. Especially preferred is use of natural rubber alone.
The other synthetic rubber includes polybutadiene rubber (BR), styrene-butadiene copolymer (SBR), styrene-isoprene copolymer (SIR), etc.

(Adhesion Promoter)

Preferably, in the coating rubber composition for the outermost belt layer 5d in the first aspect of the production method of the present invention, or the coating rubber composition for the innermost belt layer 5e in the second aspect or the coating rubber composition for the carcass ply 4 in the third aspect, an organic acid cobalt salt is incorporated in an amount of at most 0.4 parts by mass as the cobalt amount per 100 parts by mass of the rubber component therein, more preferably in an amount of from 0.01 to 0.4 parts by mass, even more preferably from 0.02 to 0.3 parts by mass. When an organic acid cobalt salt is incorporated in an amount of at most 0.4 parts by mass as the cobalt amount, then the aging resistance of the coating rubber composition can be favorably prevented from lowering. Incorporating an organic acid cobalt salt in an amount of at least 0.01 parts by mass as the cobalt amount is more preferred as increasing the initial adhesiveness of the composition.

The organic acid cobalt salt includes cobalt naphthenate, cobalt rosinate, cobalt stearate, other cobalt salts of linear or branched monocarboxylic acids having from 5 to 20 carbon atoms or so (for example, trade name "Manobond C" Series by OM Group Inc.), etc.

(Vulcanizing Agent)

Preferably, in the coating rubber composition for the outermost belt layer 5d in the first aspect of the production method of the present invention, or the coating rubber composition for the innermost belt layer 5e in the second aspect or the coating rubber composition for the carcass ply 4 in the third aspect, rubber is incorporated as a vulcanizing agent, in an amount of at most 7.0 parts by mass per 100 parts by mass of the rubber component therein. More preferably, the amount falls within a range of from 3.0 to 7.0 parts by mass, even more preferably from 4.0 to 6.0 parts by mass. Incorporating sulfur in an amount of at most 7.0 parts by mass can favorably prevent the aging resistance of the coting rubber composition from lowering. Incorporating sulfur in an amount of at least 3.0 parts by mass is more preferred as improving the initial adhesiveness of the composition.

(Other Additives)

In addition to the above-mentioned components, any other additives, for example, a vulcanization activator such as zinc flower, organic acid (stearic acid, etc.) or the like, a vulcanization accelerator, an inorganic filler except silica, an antiaging agent, an ozone degradation inhibitor, a softening agent or the like may be added to the coating rubber composition for the outermost belt layer 5d in the first aspect of the production method of the present invention, or the coating rubber composition for the innermost belt layer 5e in the second aspect or the coating rubber composition for the carcass ply 4 in the third aspect.

As the vulcanization accelerator, preferably used here is a sulfenamide-type accelerator such as N,N'-dicyclohexyl-2-benzothiazolylsulfenamide, N-cyclohexyl-2-benzothiazolylsulfenamide, N-tert-butyl-2-benzothiazolylsulfenamide, N-oxydiethylene-2-benzothiazolylsulfenamide, etc. If desired, also usable are a thiazol-type accelerator such as 2-mercaptobenzothiazole, di-2-benzothiazolyl disulfide, etc.; a thiuram-type accelerator such as tetrabenzylthiuram disulfide, tetramethylthiuram disulfide, tetraethylthiuram disulfide, tetrakis(2-ethylhexyl)thiuram disulfide, tetramethylthiuram monosulfide, etc.

(Vulcanizate Physical Property of Coating Rubber Composition for Outermost Belt Layer 5d)

Regarding the physical property of the vulcanized rubber, the loss tangent ($\tan\delta$) under an initial load of 160 g at a frequency of 52 Hz, a strain of 2% and a measurement temperature of 25°C of the coating rubber composition for the outermost belt layer 5d in the belt portion 5 is preferably at most 0.17 from the viewpoint of improving the low-heat-generation property of the composition.

(Vulcanizate Physical Property of Coating Rubber Composition for Innermost Belt Layer 5e)

Regarding the physical property of the vulcanized rubber, the loss tangent ($\tan\delta$) under an initial load of 160 g at a frequency of 52 Hz, a strain of 2% and a measurement temperature of 25°C of the coating rubber composition for the innermost belt layer 5e in at least the tire radial direction of the belt layers in the belt portion 5 is preferably at most 0.17 from the viewpoint of improving the low-heat-generation property of the composition.

(Vulcanizate Physical Property of Coating Rubber Composition for Carcass Ply 4)

Regarding the physical property of the vulcanized rubber, the loss tangent ($\tan\delta$) under an initial load of 160 g at a frequency of 52 Hz, a strain of 2% and a measurement temperature of 25°C of the coating rubber composition for carcass ply 4 is preferably at most 0.17 from the viewpoint of improving the low-heat-generation property of the composition.

The kneading apparatus for use for producing the coating rubber composition in the present invention includes a Banbury mixer, a roll an intensive mixer, etc.

In case where the casing portion is vulcanized in producing the tire casing A in the production method of the present invention, first an unvulcanized casing portion is formed. The casing portion can be formed in the same manner as that for a forming process for a green tire in a known tire production method. For example, a carcass ply rubberized with unvulcanized rubber is wound around a forming drum, a bead core is set around both ends thereof, and thereafter the two ends are folded, and further unvulcanized rubber of a Sidewall portion is stuck thereto. Next, the center part in the width direction is expanded to form a toroidal form of which the cross section is horseshoe, and thereafter an unvulcanized belt layer is arranged around the outer periphery of the carcass layer, and preferably a thin layer having the same rubber composition as that of the inner layer of the tread portion 8 is stuck thereonto to provide a casing portion.

The casing portion is set in a vulcanization device (mold), and vulcanized and molded therein to thereby produce the tire casing A having a part of the tread portion 8 or not having the tread portion 8 at all.

In the production method of the present invention, the vulcanization method for the casing portion (unvulcanized tire casing A) is a method of surrounding the outside of the casing portion by the use of the vulcanization mold, and the casing portion is vulcanized and molded in such a manner that the bead portion side of the casing portion is heated by a first heating means, the belt portion side of the casing portion is heated by a second heating means, and the quantity of heat per unit volume to be given to the belt portion side by the second heating means is smaller than the quantity of heat per unit volume to be given to the bead portion side by the first heating means.

In ordinary heavy loading tires (for example, pneumatic radial tires for trucks or busses), the thickness of the belt portion side of the casing portion is small as compared with the maximum thickness of the bead portion N, and therefore there exists a latest vulcanization point inside the bead portion N. As described above, when a small quantity of heat per unit volume is given to the belt portion side and a large quantity of heat per unit volume is given to the bead portion side, then the carcass ply on the belt portion side and/or the shoulder portion (tire shoulder portion) side is not overvulcanized, and favorably as a result, the adhesiveness to steel cords (both the initial adhesiveness and the adhesiveness after long-term use thereto) of the coating rubber composition of the outermost belt layer 5d and/or the coating rubber composition of the carcass ply 4 betters, tanδ lowers and the low-heat-generation property of the composition betters.

Regarding the means of imparting a small quantity of heat per unit volume to the belt portion side and imparting a large quantity of heat per unit volume to the bead portion side, in case where the casing portion is vulcanized to produce the tire casing A, for example, the casing portion is put into a vulcanization mold, and pressure and heat are given thereto from inside the casing portion by the use of a vulcanization bladder therein, and in this case, from the first heating means for the part of the vulcanization mold that faces the bead portion N of the casing portion, the casing portion may be heated at a higher temperature, and from the second heating means for the part of the vulcanization mold that faces the belt portion side of the casing portion, the casing portion may be heated at a lower temperature than from the first heating means.

In the first and third aspects of the production method of the present invention, preferably, the ultimate temperature of the outermost belt layer 5d (especially the latest vulcanization point of the outermost belt layer 5d) (hereinafter referred to as ultimate temperature) during vulcanization of the casing portion is from 110 to 160°C, and the ultimate temperature of the bead portion N (especially the latest vulcanization point of the bead portion N) is from 125 to 180°C, and the ultimate temperature at the latest vulcanization point of the outermost belt layer 5d is lower by from 2 to 25°C than the ultimate temperature at the latest vulcanization point of the bead portion N, more preferably by from 4 to 25°C, even more preferably by from 4 to 20°C. This is for preventing the belt portion side from being overvulcanized and for improving the initial adhesiveness to steel cords and the low-heat-generation property of the coating rubber composition for the outermost belt layer 5d.

When the ultimate temperature of the outermost belt layer 5d (especially the latest vulcanization point of the outermost belt layer 5d) is 110°C or higher, then the vulcanization can go on favorably; and when 160°C or lower, the initial adhesiveness to steel cords can favorably better. When the ultimate temperature of the bead portion N (especially the latest vulcanization point of the bead part N) is 125°C or higher, then the vulcanization time for the tire casing A can be favorably shortened; and when 180°C or lower, the durability of the bead portion can favorably better.

In the second aspect of the production method of the present invention, preferably, the ultimate temperature of the innermost belt layer 5e (especially the latest vulcanization point of the innermost belt layer 5e) during vulcanization of the casing portion is from 110 to 160°C, and the ultimate temperature of the bead portion N (especially the latest vulcanization point of the bead portion N) is from 125 to 180°C, and the ultimate temperature at the latest vulcanization point of the innermost belt layer 5e is lower by from 2 to 25°C than the ultimate temperature of the bead portion N, more preferably by from 4 to 25°C, even more preferably by from 4 to 20°C. This is for preventing the belt portion side from being overvulcanized and for improving the initial adhesiveness to steel cords and the low-heat-generation property of the coating rubber composition for the innermost belt layer 5e.

When the ultimate temperature of the innermost belt layer 5e (especially the latest vulcanization point of the innermost belt layer 5e) is 110°C or higher, then the vulcanization can go on favorably; and when 160°C or lower, the initial adhesiveness to steel cords can favorably better. When the ultimate temperature of the bead portion N (especially the latest vulcanization point of the innermost belt layer 5e) is 125°C or higher, then the vulcanization time for the tire casing A can be favorably shortened; and when 180°C or lower, the durability of the bead portion can favorably better.

On the other hand, in case where the precured tread member B is produced, a tread material of an unvulcanized rubber of which the cross section in the width direction is nearly trapezoidal is extruded through an extruder (not shown), and then cut in a predetermined length, and thereafter the thus-cut strip-shaped tread material is set in a vulcanization mold composed of, for example, an upper mold portion and a lower mold potion, and vulcanized therein to give a ring-shaped precured tread member B. In this stage, formed are multiple grooves each extending in the lengthwise direction of the ring-shaped outer surface of the precured tread member B.

The curing condition is preferably at from 100 to 185°C or so for a period of time for which the curing of the precured tread member B can be completely cured.

In the tire casing A and the precured tread member B produced in the manner as above, the tire casing surface that has been kept in contact with the mold surface during molding has the property of hardly crosslinking with the unvulcanized rubber, and therefore for removing (cutting off) the surface layer rubber of the outer surface to be the adhesive face between the tire casing A and the precured tread member B for the purpose of securing the adhesiveness therebetween, it is desirable that the adhesive face between the tire casing A and the precured tread member B is previously buffed by the use of a buffing machine or the like. However, the surface layer rubber to be cut off is an extremely thin layer having a thickness of at most 0.001 mm in view of the object thereof.

Regarding the method of cutting of the surface layer rubber, there is given no specific limitation thereto so far as the surface roughness of the buffed surface could be within a suitable range. Using a grinding stone, a metal-made buffing tool, a nonwoven-made buffing material or the like, the adhesive face may be buffed; and above all, preferred is use of a nonwoven fabric-made buffing material for extremely thinning the surface layer rubber to be buffed to have a thickness of from 10 nm to 1 mm. With the nonwoven fabric-made buffing material, the force given for buffing can be dispersed by the spring effect of the buffing material, which is therefore free from troubles of overcutting or deep scratching. Accordingly, the nonwoven fabric-made buffing material, is a favorable buffing material for uniformly and thinly cutting (roughening) the surface layer in the manner as above. The nonwoven fabric-made buffing material can be fitted to an already-existing buffing machine for use herein for buffing. As the nonwoven fabric-made buffing material, concretely mentioned are Sumitomo 3M Limited's "Scotch-Brite", etc.

The outer surface to be the adhesive face between the tire casing A and the precured tread member B is preferably uniformly roughened in the manner as mentioned above, for further increasing the adhesiveness owing to the anchoring effect thereof.

Next, the tire casing A and the precured tread member B are bonded together and integrally vulcanized and molded to give the tire 1. In this stage, it is desirable that the tire casing A and the precured tread member B are bonded via an unvulcanized cushion rubber layer, and vulcanized and molded. The unvulcanized cushion rubber layer may be an ordinary sheet-like cushion rubber, or a liquid rubber may be applied to the adhesive face to form the unvulcanized cushion rubber layer thereon.

In the cushion rubber composition, if desired, various chemicals used in ordinary rubber industry, such as carbon black as a reinforcing filler, as well as a softening agent (oil), an antiaging agent, a crosslinking agent such as sulfur or the like may be suitably incorporated, in addition to rubber components, various vulcanization accelerator components and a crosslinking component used in ordinary rubber compositions . As the rubber component, usable is natural rubber (NR) or synthetic rubber either singly or as combined. The synthetic rubber includes, for example, synthetic polyisoprene rubber, polybutadiene rubber (BR), styrene-butadiene rubber (SBR), butyl rubber, halogenobutyl rubber, etc. As the rubber composition, preferred here is use of a tread rubber composition (especially tread base rubber composition).

Next, the tire casing A to which the precured tread member B has been stuck is conveyed into a vulcanization apparatus not shown (for example, a vulcanizer or a steam pan), in which the unvulcanized cushion rubber layer is vulcanized to give the tire 1. In this stage, the precured tread member B is co-vulcanized and bonded to the outer periphery of the crown portion of the tire casing A.

The vulcanization condition is preferably at from 60 to 140°C or so and for a period of time for which the cushion rubber can be completely vulcanized.

During the vulcanization, the ultimate temperature at the latest vulcanization point of the outermost belt layer 5d in the first aspect of the production method of the present invention in bonding the tire casing A and the precured tread member B together and integrally vulcanizing them is preferably lower than the ultimate temperature at the latest vulcanization point of the outermost belt layer 5d in vulcanizing the casing portion. This is for the purpose of optimizing the degree of vulcanization in vulcanizing the casing portion and the total degree of vulcanization in vulcanizing the tire casing A and the precured tread member B so that they could not be excessively too high, whereby the initial adhesiveness to steel cords, the low-heat-generation property and the durability of the coating rubber composition for the outermost belt layer 5d can be bettered.

During the vulcanization, the ultimate temperature at the latest vulcanization point of the innermost belt layer 5e in the second aspect of the production method of the present invention in bonding the tire casing A and the precured tread member B together and integrally vulcanizing them is preferably lower than the ultimate temperature at the latest vulcanization point of the innermost belt layer 5e in vulcanizing the casing portion. This is for the purpose of optimizing the degree of vulcanization in vulcanizing the casing portion and the total degree of vulcanization in vulcanizing the tire casing A and the precured tread member B so that they could not be excessively too high, whereby the initial adhesiveness to steel cords, the low-heat-generation property and the durability of the coating rubber composition for the innermost belt layer 5e can be bettered.

During the vulcanization, the ultimate temperature of the carcass ply 4 in the crown center position in the third aspect of the production method of the present invention in bonding the tire casing A and the precured tread member B together and integrally vulcanizing them is preferably lower than the ultimate temperature of the carcass ply 4 in the crown center position in vulcanizing the casing portion. This is for the purpose of optimizing the degree of vulcanization in vulcanizing the casing portion and the total degree of vulcanization in vulcanizing the tire casing A and the precured tread member B so that they could not be excessively too high, whereby the initial adhesiveness to steel cords, the low-heat-generation property and the durability of the coating rubber composition for the carcass ply 4 on the belt potion side and the shoulder portion (tire shoulder portion) side can be bettered.

Examples

The invention is described in more detail with reference to Examples given below, however, the invention is not limited to the following Examples at all.

The low rolling resistance, tan$\delta$, and the cracking resistance after long-term use were evaluated according to the methods mentioned below.

<Low Rolling Resistance>

Each trial tire was tested in a drum test for the resistance occurring on the tire tread in the running direction in running at a speed of 80 km/hr. The value of Comparative Example 1 in Table 2, the value of Comparative Example 20 in Table 3, the value of Comparative Example 21 in Table 5, the value of Example 25 in Table 6, the value of Comparative Example 41 in Table 8 and the value of Comparative Example 59 in Table 9 each were referred to as 100, and the value of each tested tire was expressed as an index according to the formula mentioned below. The tires having a larger value have a smaller rolling resistance and are better.

$$\text{Low Rolling Resistance Index} = \{(\text{rolling resistance of}$$
$$\text{the tire of Comparative Example 1, 20, 21, 42, 59 or Example}$$
$$25)/(\text{rolling resistance of tested tire})\} \times 100$$

<Loss Tangent (tan$\delta$)>

Using Toyo Seiki's spectrometer (dynamic viscoelastometer), each trial tire was tested for tan$\delta$ under an initial load of 160 g and at a frequency of 52 Hz, a strain of 2% and a measurement temperature of 25°C. The tires having a smaller value have a better low-heat-generation property.

<Cracking Resistance of Rubber Composition after Long-Term Use>

A crack of 0.5 mm was given to the center part of a JIS No. 3 test piece after long-term thermal aging, and repeated fatigue was given thereto at room temperature and at a strain of from 50 to 100%, and the frequency of fatigue repetition until the sample was cut was counted. The value at each strain was determined, and the found data were averaged to give a mean value of the tested composition. In Table 2, the value of Comparative Example 1 was referred to as 100, and in Table 3, the value of Example 12 was referred to 100; and the value of each tested composition was expressed as an index according to the formula mentioned below. The compositions having a larger index value have

better cracking resistance.

$$\text{Cracking Resistance Index after Long-Term Use} =$$
$$\{(\text{frequency until cutting of test sample})/(\text{frequency until}$$
$$\text{cutting of sample of Comparative Example 1 or Example 12})\} \times$$
$$100$$

<Cracking Resistance of Innermost Belt Layer after Long-Term Use>

A molded and vulcanized trial tire was given a side force of 15 kN under a normal inner pressure and a normal load in an atmosphere at 40°C and at a speed of 60 km/hr, and the drum test was carried out for 2 days. After the test, the innermost belt layer was taken out, and the length of the extended crack at the end of the belt layer was measured. In Table 5, the value of Comparative Example 21 was referred to as 100, and in Table 6, the value of Example 23 was referred to as 100; and the mean value of the extended crack lengths of each tire was expressed as an index. The tires having a larger index value have better cracking resistance.

$$\text{Cracking Resistance Index after long-term use} =$$
$$\{(\text{frequency until cutting of test sample})/(\text{frequency until}$$
$$\text{cutting of sample of Comparative Example 21 or Example 23})\}$$
$$\times 100$$

<Cracking Resistance of Carcass Ply after Long-Term Use>

A molded and vulcanized trial tire was given a side force of 15 kN under a normal inner pressure and a normal load in an atmosphere at 40°C and at a speed of 60 km/hr, and the drum test was carried out for 2 days. After the test, the coating rubber of the carcass ply positioned at the center between the end point of the innermost belt layer 5a and the maximum width position of the tire was taken out, and the rubber sample was given a crack of 0.2 mm and given repeated fatigue at room temperature and at a strain of from 50 to 100%, and the frequency of repeated fatigue until cutting of the sample was counted. The value at each strain was determined, and the found data were averaged to give a mean value of the tested tire. In Table 8, the value of Comparative Example 41 was referred to as 100, and in Table 9, the value of Example 36 was referred to 100; and the value of each tested tire was expressed as an index according to the formula mentioned below. The tires having a larger index value have better carcass ply cracking resistance.

$$\text{Cracking Resistance Index after Long-Term Use} =$$
$$\{(\text{frequency until cutting of test sample})/(\text{frequency until}$$
$$\text{cutting of sample of Comparative Example 41 or Example 36})\}$$
$$\times 100$$

Examples 1 to 14, and Comparative Examples 1 to 20

As in Tables 1 to 3 each showing the formulations of coating rubber compositions for outermost belt layer, 34 types of coating rubber compositions for use in Examples 1 to 14 and Comparative Examples 1 to 20 were produced according to an ordinary method. The coating rubber composition was vulcanized in the manner of simulating the outermost belt layer temperature in tire vulcanization (in two-stage vulcanization, both temperatures in two stages) thereby preparing test pieces for measurement of tan$\delta$ and cracking resistance after long-term use. The outermost belt layer temperature in tire vulcanization was simulated by burying a thermocouple in the outermost belt layer and measuring the temperature change relative to the vulcanization time in the vulcanization method for a tire having a tire size of 11R 22.5 mentioned below, and by feeding back the results to the vulcanization temperature for the test piece.

Tanδ was measured according to the above-mentioned method. Next, a JIS No. 3 test piece was sealed up in a container having a nitrogen atmosphere, and left in a gear oven at 100°C for 24 hours to give a JIS No. 3 test piece after long-term thermal aging. The JIS No. 3 test piece after long-term thermal aging was tested for cracking resistance after long-term use according to the above-mentioned method. The results are shown in Tables 2 and 3.

Next, 18 types of the coating rubber compositions of Examples 1 to 14 and Comparative Examples 11, 13, 16 and 18 among the above were used for the outermost belt layer to prepare 18 types of unvulcanized casing portions, for which the tire size was 11R 22.5 in all cases. As shown in Fig. 4, the belt portion was composed of 4 belt layers. The casing portion was vulcanized according to a method of surrounding the casing portion from the outside by a vulcanization mold and pressurizing and heating it from the inside by the use of a vulcanization bladder (pressurizing with high-pressure steam at 150°C), thereby producing a tire casing. In this stage, the first heating means of the vulcanization mold block that faced the bead portion side of the casing portion was kept at 170°C, and the second heating means of the vulcanization mold block that faced the belt portion side of the casing portion was kept at 140°C. Accordingly, the quantity of heat per unit volume to be given to the belt portion side by the second heating means was made smaller than the quantity of heat per unit volume to be given to the bead portion side by the first heating means. The ultimate temperature at the latest vulcanization point of the outermost belt layer was 140°C, and the ultimate temperature at the latest vulcanization point of the bead portion was 155°C. The vulcanization time was 30 minutes in every case.

Separately, a precured tread member was prepared through vulcanization molding under heat at 160°C to have a tread pattern previously given thereto.

Next, the bonding face of the tire casing and that of the precured tread member were buffed with a buffing machine, and then a cushion rubber to bond the tire casing and the precured tread member was produced according to the formulation shown in Table 1. The unvulcanized cushion rubber was stuck to the bonding face of the tire casing.

Next, each precured tread member was stuck to each tire casing, and thereafter vulcanized in a vulcanization apparatus at 120°C for 2 hours, thereby giving a tire with the tire casing and the precured tread member bonding together. In this case, the ultimate temperature at the latest vulcanization point of the outermost belt layer was 120°C.

Thus produced, those 18 types of tires (tire size 11R 22.5) were evaluated for the low rolling resistance according to the above-mentioned method. The evaluation results are shown in Tables 2 and 3.

Next, 16 types of the coating rubber compositions of Comparative Examples 1 to 10, 12, 14, 15, 17, 19 and 20 among the above were used for the outermost belt layer to prepare 16 types of unvulcanized casing portions, for which the tire size was 11R 22.5 in all cases. An unvulcanized tread member was stuck to the outside in the tire radial direction of the unvulcanized casing portion, thereby producing 16 types of unvulcanized tires. As shown in Fig. 4, the belt portion was composed of 4 belt layers. These 16 types of unvulcanized tires were vulcanized according to ordinary one-stage vulcanization, thereby producing 16 types of tires.

Thus produced, those 16 types of tires (tire size 11R 22.5) were evaluated for the low rolling resistance according to the above-mentioned method. The evaluation results are shown in Tables 2 and 3.

[Table 1]

**Table 1**

| Formulation (part by mass) | Coating Rubber Composition for Outermost Belt layer | Cushion Rubber |
|---|---|---|
| Natural Rubber | | 100 |
| Synthetic Isoprene Rubber | | - |
| Carbon Black | As in Table 2 and Table 3 | 35 *1 |
| Silica | | - |
| Spindle Oil | - | 10 |
| Antiaging Agent *2 | 2 | 2 |
| Organic Acid Cobalt Salt *3 | 1 | - |
| Zinc Flower | 8 | 5 |
| Stearic Acid | 1 | 3 |
| Accelerator DZ *4 | 1 | - |
| Accelerator TBzTD *5 | - | 0.2 |
| Accelerator NS *6 | - | 0.8 |

(continued)

| Formulation (part by mass) | Coating Rubber Composition for Outermost Belt layer | Cushion Rubber |
|---|---|---|
| Accelerator M *7 | - | 0.5 |
| Sulfur | 5 | 3 |

[Notes]
*1: HAF(N-330), Asahi Carbon's trade name "Asahi#70" (nitrogen adsorption specific surface area: 77 $m^2$/g)
*2: N-(1,3-dimethylbutyl)-N'-phenyl-p-phenylenediamine, Ouchi Shinko Chemical Industry's trade name "Nocrac 6C"
*3: OM Group's trade name "Manobond C225" (registered trademark) (cobalt content 22.5%)
*4: N,N'-dicyclohexyl-2-benzothiazolylsulfenamide, Ouchi Shinko Chemical Industry's trade name "Nocceler DZ"
*5: Tetrabenzylthiuram disulfide, Sanshin Chemical Industry's trade name "Sanceler TBZTD"
*6: N-tert-butyl-2-benzothiazolylsulfenamide, Sanshin Chemical Industry's trade name "Sanceler NS"
*7: 2-mercaptobenzothiazole, Ouchi Shinko Chemical Industry's trade name "Nocceler M-P"

[Table 2]

Table 2

| Coating Rubber Composition for Outermost Belt Layer | | Example | | | | | | | | | | | Comparative Example | | | | | | | | | | | | |
|---|---|---|---|---|---|---|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 1 | 2 | 3 | 4 | 5 | 6 | 7 | 8 | 9 | 10 | 11 | 12 | 13 |
| Formulation (part by mass) | Natural rubber | 100 | 100 | 100 | 100 | 100 | 100 | 100 | 100 | 100 | 100 | 100 | 100 | 100 | 100 | 100 | 100 | 100 | 100 | 100 | 100 | 100 | 100 | 100 | 100 |
| | Synthetic Isoprene Rubber *8 | - | - | - | - | - | - | - | - | - | - | - | - | - | - | - | - | - | - | - | - | - | - | - | - |
| | Carbon Black HAF *9 | 60 | 35 | 45 | - | - | - | - | - | - | - | - | 60 | - | - | - | - | 35 | 45 | - | - | - | - | - | - |
| | Carbon Black FEF *10 | - | - | - | 45 | - | - | 35 | 35 | 45 | 50 | 50 | - | 45 | 45 | 50 | 50 | - | - | 35 | - | - | - | - | - |
| | Carbon Black GPF *11 | - | - | - | - | 45 | 45 | - | - | - | - | - | - | - | - | - | - | - | - | - | 45 | - | - | - | - |
| | Carbon Black ISAF *12 | - | - | - | - | - | - | - | - | - | - | - | - | - | - | - | - | - | - | - | - | 45 | 45 | - | - |
| | Carbon Black SRF-LS *13 | - | - | - | - | - | - | - | - | - | - | - | - | - | - | - | - | - | - | - | - | - | - | 45 | 45 |
| | Silica *14 | - | - | - | 5 | 5 | - | 10 | - | - | - | 5 | - | 5 | - | - | 5 | - | - | - | - | - | - | - | - |
| Vulcanization Method | | 2-stage vulcanization | 2-stage vulcanization | 2-stage vulcanization | 2-stage vulcanization | 2-stage vulcanization | 2-stage vulcanization | 2-stage vulcanization | 2-stage vulcanization | 2-stage vulcanization | 2-stage vulcanization | 2-stage vulcanization | 1-stage vulcanization | 1-stage vulcanization | 1-stage vulcanization | 1-stage vulcanization | 1-stage vulcanization | 1-stage vulcanization | 1-stage vulcanization | 1-stage vulcanization | 1-stage vulcanization | 1-stage vulcanization | 2-stage vulcanization | 1-stage vulcanization | 2-stage vulcanization |
| Evaluation Results | Low Rolling Resistance | 101 | 103 | 102 | 103 | 104 | 103 | 104 | 103 | 102 | 102 | 102 | 100 | 101 | 102 | 101 | 101 | 102 | 101 | 103 | 103 | 95 | 96 | 104 | 104 |
| | $\tan\delta$ | 0.19 | 0.16 | 0.17 | 0.16 | 0.15 | 0.16 | 0.15 | 0.16 | 0.17 | 0.18 | 0.18 | 0.21 | 0.17 | 0.17 | 0.19 | 0.19 | 0.18 | 0.19 | 0.16 | 0.16 | 0.30 | 0.28 | 0.15 | 0.15 |
| | Cracking Resistance after Long-Term Use | 110 | 100 | 105 | 112 | 108 | 101 | 106 | 100 | 108 | 108 | 108 | 100 | 88 | 84 | 90 | 88 | 89 | 95 | 75 | 85 | 95 | 105 | 75 | 95 |

[Notes]

*8: JSR's polyisoprene rubber (IR), trade name "IR2200"

*9: HAF(N-330), Asahi Carbon's trade name "Asahi #70" (nitrogen adsorption specific surface area: 77 $m^2$/g)

*10: FEF(N-550), Asahi Carbon's trade name "Asahi #60" (nitrogen adsorption specific surface area: 40 $m^2$/g)

*11: GPF(N-660), Asahi Carbon's trade name "Asahi #55" (nitrogen adsorption specific surface area: 26 $m^2$/g)

*12: ISAF(N-220), Asahi Carbon's trade name "Asahi #80" (nitrogen adsorption specific surface area: 115 $m^2$/g)

*13: SRF-LS, Tokai Carbon's trade name "Seast SP" (nitrogen adsorption specific surface area: 23 $m^2$/g)

*14: Tosoh Silica's trade name "Nipsil AQ" (BET specific surface area: 220 $m^2$/g)

[Table 3]

**Table 3**

| Coating Rubber Composition for Outermost Belt Layer | | | Example | | | Comparative Example | | | | | | | |
|---|---|---|---|---|---|---|---|---|---|---|---|---|---|
| | | | 12 | 13 | 14 | 14 | 15 | 16 | 17 | 18 | 19 | 20 |
| Formulation (part by mass) | Natural Rubber | | 70 | 100 | 100 | 70 | 100 | 100 | 100 | 100 | 100 | 100 |
| | Synthetic Isoprene Rubber *8 | | 30 | - | - | 30 | - | - | - | - | - | - |
| | Carbon Black HAF *9 | | - | 45 | - | - | - | - | - | - | 45 | - |
| | Carbon Black FEF *10 | | 45 | - | 60 | 45 | 25 | 25 | 25 | 25 | - | 60 |
| | Carbon Black GPF *11 | | - | - | - | - | - | - | - | - | - | - |
| | Silica *14 | | 5 | 5 | 5 | 5 | - | - | 5 | 5 | 5 | 5 |
| Vulcanization Method | | | 2-stage vulcanization | 2-stage vulcanization | 2-stage vulcanization | 1-stage vulcanization | 1-stage vulcanization | 2-stage vulcanization | 1-stage vulcanization | 2-stage vulcanization | 1-stage vulcanization | 1-stage vulcanization |
| Evaluation Results | Low Rolling Resistance | | 103 | 101 | 100 | 103 | 104 | 104 | 104 | 104 | 101 | 100 |
| | tanδ | | 0.16 | 0.19 | 0.21 | 0.16 | 0.14 | 0.14 | 0.14 | 0.14 | 0.19 | 0.20 |
| | Cracking Resistance after Long-Term Use | | 100 | 105 | 105 | 88 | 55 | 65 | 58 | 68 | 98 | 95 |

[Notes]
*8 to *11 and *14 are the same as in Table 2.

Examples 15 to 25, and Comparative Examples 21 to 40

As in Tables 4 to 6 each showing the formulations of coating rubber compositions for innermost belt layer, 31 types of coating rubber compositions for use in Examples 15 to 25 and Comparative Examples 21 to 40 were produced according to an ordinary method. The coating rubber composition was vulcanized in the manner of simulating the innermost belt layer temperature in tire vulcanization (in two-stage vulcanization, both temperatures in two stages) thereby preparing test pieces for measurement of tanδ. The innermost belt layer temperature in tire vulcanization was simulated by burying a thermocouple in the innermost belt layer and measuring the temperature change relative to the vulcanization time in the vulcanization method for a tire having a tire size of 11R 22.5 mentioned below, and by feeding back the results to the vulcanization temperature for the test piece. Tanδ was measured according to the above-mentioned method. The measurement results are shown in Tables 5 and 6.

Next, 16 types of the coating rubber compositions of Examples 15 to 25 and Comparative Examples 27, 30, 32, 36 and 38 among the above were used for the innermost belt layer to prepare 16 types of unvulcanized casing portions, for which the tire size was 11R 22.5 in all cases. As shown in Fig. 5, the belt portion was composed of 3 belt layers of which the innermost belt layer was a crossing layer. The casing portion was vulcanized according to a method of surrounding the casing portion from the outside by a vulcanization mold and pressurizing and heating it from the inside by the use of a vulcanization bladder (pressurizing with high-pressure steam at 150°C), thereby producing a tire casing. In this stage, the first heating means of the vulcanization mold block that faced the bead portion side of the casing portion was kept at 170°C, and the second heating means of the vulcanization mold block that faced the belt portion side of the casing portion was kept at 140°C. Accordingly, the quantity of heat per unit volume to be given to the belt portion side by the second heating means was made smaller than the quantity of heat per unit volume to be given to the bead portion side by the first heating means. The ultimate temperature at the latest vulcanization point of the innermost belt layer was 150°C, and the ultimate temperature at the latest vulcanization point of the bead portion was 155°C. The vulcanization time was 30 minutes in every case.

Separately, a precured tread member was prepared through vulcanization molding under heat at 160°C to have a tread pattern previously given thereto.

The bonding face of the tire casing and that of the precured tread member were buffed with a buffing machine.

Next, a cushion rubber to bond the tire casing and the precured tread member was produced according to the formulation shown in Table 4. The unvulcanized cushion rubber was first stuck to the bonding face of the tire casing. Subsequently, each precured tread member was stuck to each tire casing, and thereafter vulcanized in a vulcanization apparatus (vulcanizer) at 120°C for 2 hours, thereby giving a tire with the tire casing and the precured tread member bonding together. In this case, the ultimate temperature at the latest vulcanization point of the innermost belt layer was 120°C.

Thus produced, those 16 types of tires (tire size 11R 22.5) were evaluated for the low rolling resistance and the cracking resistance after long-term use, according to the above-mentioned methods. The evaluation results are shown in Tables 5 and 6.

Next, 15 types of the coating rubber compositions of Comparative Examples 21 to 26, 28, 29, 31, 33 to 35, 37, 39 and 40 among the above were used for the innermost belt layer to prepare 15 types of unvulcanized casing portions, for which the tire size was 11R 22.5 in all cases. An unvulcanized tread member was stuck to the outside in the tire radial direction of the unvulcanized casing portion, thereby producing 15 types of unvulcanized tires. As shown in Fig. 5, the belt portion was composed of 3 belt layers of which the innermost belt layer was a crossing layer. These 15 types of unvulcanized tires were vulcanized according to ordinary one-stage vulcanization, thereby producing 15 types of tires.

Thus produced, those 15 types of tires (tire size 11R 22.5) were evaluated for the low rolling resistance and the cracking resistance after long-term use according to the above-mentioned methods. The evaluation results are shown in Tables 5 and 6.

[Table 4]

**Table 4**

| Formulation (part by mass) | Coating Rubber Composition for Innermost Belt layer | Cushion Rubber |
|---|---|---|
| Natural Rubber | | 100 |
| Synthetic Isoprene Rubber | | - |
| Carbon Black | As in Table 5 and Table 6 | 50 *21 |
| Silica | | - |
| Oil *22 | - | 10 |

(continued)

| Formulation (part by mass) | Coating Rubber Composition for Innermost Belt layer | Cushion Rubber |
|---|---|---|
| Antiaging Agent *23 | 2 | 2 |
| Organic Acid Cobalt Salt *24 | 1 | - |
| Zinc Flower | 8 | 5 |
| Stearic Acid | 1 | 3 |
| Accelerator NS *25 | - | 0.8 |
| Accelerator DZ *26 | 1 | - |
| Accelerator TBzTD *27 | - | 0.2 |
| Sulfur | 5 | 3 |

[Notes]
*21: HAF(N-330), Asahi Carbon's trade name "Asahi#70" (nitrogen adsorption specific surface area: 77 m$^2$/g)
*22: Spindle oil
*23: N-(1,3-dimethylbutyl)-N'-phenyl-p-phenylenediamine, Ouchi Shinko Chemical Industry's trade name "Nocrac 6C"
*24: OM Group's trade name "Manobond C225" (registered trademark) (cobalt content 22.5%)
*25: N-tert-butyl-2-benzothiazolylsulfenamide, Sanshin Chemical Industry's trade name "Sanceler NS"
*26: N,N'-dicyclohexyl-2-benzothiazolylsulfenamide, Ouchi Shinko Chemical Industry's trade name "Nocceler DZ"
*27: Tetrabenzylthiuram disulfide, Sanshin Chemical Industry's trade name "Sanceler TBZTD"

[Table 5]

Table 5

| Coating Rubber Composition for Outermost Belt Layer | | Example | | | | | | | Comparative Example | | | | | | | | | | | |
|---|---|---|---|---|---|---|---|---|---|---|---|---|---|---|---|---|---|---|---|---|
| | | 15 | 16 | 17 | 18 | 19 | 20 | 21 | 21 | 22 | 23 | 24 | 25 | 26 | 27 | 28 | 29 | 30 | 31 | 32 |
| Formulation (part by mass) | Natural rubber | 100 | 100 | 100 | 100 | 100 | 100 | 100 | 100 | 100 | 100 | 100 | 100 | 100 | 100 | 100 | 100 | 100 | 100 | 100 |
| | Synthetic Isoprene Rubber *28 | - | - | - | - | - | - | - | - | - | - | - | - | - | - | - | - | - | - | - |
| | Carbon Black HAF *21 | 60 | 45 | - | - | - | - | - | 60 | - | - | - | 45 | - | - | - | - | - | - | - |
| | Carbon Black FEF *29 | - | - | 45 | 40 | 45 | 50 | - | - | 45 | 45 | 50 | - | 35 | 35 | - | - | - | - | - |
| | Carbon Black GPF *30 | - | - | - | - | - | - | 45 | - | - | - | - | - | - | - | 45 | - | - | - | - |
| | Carbon Black ISAF *31 | - | - | - | - | - | - | - | - | - | - | - | - | - | - | - | 45 | 45 | - | - |
| | Carbon Black SRF-LS *32 | - | - | - | - | - | - | - | - | - | - | - | - | - | - | - | - | - | 45 | 45 |
| | Silica *33 | - | - | 5 | 10 | - | - | - | - | 5 | - | - | - | - | - | - | - | - | - | - |
| Vulcanization Method | | 2-stage vulcanization | 2-stage vulcanization | 2-stage vulcanization | 2-stage vulcanization | 2-stage vulcanization | 2-stage vulcanization | 2-stage vulcanization | 1-stage vulcanization | 1-stage vulcanization | 1-stage vulcanization | 1-stage vulcanization | 1-stage vulcanization | 1-stage vulcanization | 2-stage vulcanization | 1-stage vulcanization | 1-stage vulcanization | 2-stage vulcanization | 1-stage vulcanization | 2-stage vulcanization |
| Evaluation Results | Low Rolling Resistance | 101 | 103 | 103 | 104 | 105 | 104 | 107 | 100 | 102 | 104 | 103 | 102 | 105 | 106 | 106 | 92 | 93 | 108 | 109 |
| | tanδ | 0.19 | 0.17 | 0.17 | 0.15 | 0.16 | 0.16 | 0.14 | 0.21 | 0.17 | 0.16 | 0.18 | 0.18 | 0.15 | 0.14 | 0.14 | 0.29 | 0.27 | 0.13 | 0.12 |
| | Cracking Resistance after Long-Term Use | 108 | 100 | 110 | 105 | 107 | 109 | 98 | 100 | 85 | 83 | 85 | 87 | 77 | 94 | 80 | 95 | 105 | 70 | 82 |

[Notes]

*21 is the same as in Table 4.

*28: JSR's polyisoprene rubber (IR), trade name "IR2200"

*29: FEF(N-550), Asahi Carbon's trade name "Asahi #60" (nitrogen adsorption specific surface area: 40 $m^2/g$)

*30: GPF(N-660), Asahi Carbon's trade name "Asahi #55" (nitrogen adsorption specific surface area: 26 $m^2/g$)

*31: ISAF(N-220), Asahi Carbon's trade name "Asahi #80" (nitrogen adsorption specific surface area: 115 $m^2/g$)

*32: SRF-LS, Tokai Carbon's trade name "Seast SP" (nitrogen adsorption specific surface area: 23 $m^2/g$)

*33: Tosoh Silica's trade name "Nipsil AQ" (BET specific surface area: 220 $m^2/g$)

[Table 6]

**Table 6**

| Coating Rubber Composition for Innermost Belt Layer | | Example | | | | Comparative Example | | | | | | | | |
|---|---|---|---|---|---|---|---|---|---|---|---|---|---|---|
| | | 22 | 23 | 24 | 25 | 33 | 34 | 35 | 36 | 37 | 38 | 39 | 40 |
| Formulation (part by mass) | Natural Rubber | 100 | 70 | 100 | 100 | 100 | 70 | 100 | 100 | 100 | 100 | 100 | 100 |
| | Synthetic Isoprene Rubber *28 | - | 30 | - | - | - | 30 | - | - | - | - | - | - |
| | Carbon Black HAF *21 | 50 | 45 | 45 | - | 50 | - | 35 | 35 | 35 | 35 | 45 | - |
| | Carbon Black FEF *29 | - | - | - | 60 | - | 50 | - | - | - | - | - | 60 |
| | Silica *33 | 5 | 5 | 5 | 5 | 5 | 5 | - | - | 5 | 5 | 5 | 5 |
| Vulcanization Method | | 2-stage vulcan ization | 2-stage vulcan ization | 2-stage vulcan ization | 2-stage vulcan ization | 1-stage vulcan ization | 1-stage vulcan ization | 1-stage vulcan ization | 2-stage vulcan ization | 1-stage vulcan ization | 2-stage vulcan ization | 1-stage vulcan ization | 1-stage vulcan ization |
| Evaluation Results | Low Rolling Resistance | 102 | 103 | 102 | 100 | 101 | 103 | 104 | 104 | 104 | 103 | 102 | 101 |
| | $\tan\delta$ | 0.18 | 0.16 | 0.19 | 0.21 | 0.19 | 0.16 | 0.14 | 0.14 | 0.14 | 0.14 | 0.19 | 0.20 |
| | Cracking Resistance after Long-Term Use | 107 | 100 | 108 | 105 | 86 | 88 | 70 | 90 | 75 | 95 | 98 | 95 |

[Notes]
*21, *28, *29 and *33 are the same as in Table 5.

Examples 26 to 38, and Comparative Examples 41 to 59

As in Tables 7 to 9 each showing the formulations of coating rubber compositions for carcass ply, 32 types of coating rubber compositions for use in Examples 26 to 38 and Comparative Examples 41 to 59 were produced according to an ordinary method.

Next, 17 types of the coating rubber compositions of Examples 26 to 38 and Comparative Examples 50, 52, 55 and 57 among the above were used for carcass ply to prepare 17 types of unvulcanized casing portions, for which the tire size was 11R 22.5 in all cases. As shown in Fig. 4, the belt portion was composed of 4 belt layers. The casing portion was vulcanized according to a method of surrounding the casing portion from the outside by a vulcanization mold and pressurizing and heating it from the inside by the use of a vulcanization bladder (pressurizing with high-pressure steam at 150°C), thereby producing a tire casing. In this stage, the first heating means of the vulcanization mold block that faced the bead portion side of the casing portion was kept at 170°C, and the second heating means of the vulcanization mold block that faced the belt portion side of the casing portion was kept at 140°C. Accordingly, the quantity of heat per unit volume to be given to the belt portion side by the second heating means was made smaller than the quantity of heat per unit volume to be given to the bead portion side by the first heating means. The ultimate temperature at the latest vulcanization point of the outermost belt layer was 140°C, the ultimate temperature of the carcass ply at the crown center position was 150°C, and the ultimate temperature at the latest vulcanization point of the bead portion was 155°C. The vulcanization time was 30 minutes in every case.

Separately, a precured tread member was prepared through vulcanization molding under heat at 160°C to have a tread pattern previously given thereto.

Next, the bonding face of the tire casing and that of the precured tread member were buffed with a buffing machine, and then a cushion rubber to bond the tire casing and the precured tread member was produced according to the formulation shown in Table 7. The unvulcanized cushion rubber was stuck to the bonding face of the tire casing.

Subsequently, each precured tread member was stuck to each tire casing, and thereafter vulcanized in a vulcanization apparatus at 120°C for 2 hours, thereby giving a tire with the tire casing and the precured tread member bonding together. In this case, the ultimate temperature at the latest vulcanization point of the outermost belt layer was 120°C, and the ultimate temperature of the carcass ply at the crown center position was 120°C.

Thus produced, those 17 types of tires (tire size 11R 22.5) were evaluated for the low rolling resistance and the cracking resistance after long-term use, according to the above-mentioned methods. The evaluation results are shown in Tables 8 and 9.

Next, 15 types of the coating rubber compositions of Comparative Examples 41 to 49, 51, 53, 54, 56, 58 and 59 among the above were used for carcass ply to prepare 15 types of unvulcanized casing portions, for which the tire size was 11R 22.5 in all cases. An unvulcanized tread member was stuck to the outside in the tire radial direction of the unvulcanized casing portion, thereby producing 15 types of unvulcanized tires. As shown in Fig. 4, the belt portion was composed of 4 belt layers. These 15 types of unvulcanized tires were vulcanized according to ordinary one-stage vulcanization, thereby producing 15 types of tires.

Thus produced, those 15 types of tires (tire size 11R 22.5) were evaluated for the low rolling resistance and the cracking resistance after long-term use according to the above-mentioned methods. The evaluation results are shown in Tables 8 and 9.

[Table 7]

**Table 7**

| Formulation (part by mass) | Coating Rubber Composition for Carcass Ply | Cushion Rubber |
|---|---|---|
| Natural Rubber | | 100 |
| Synthetic Isoprene Rubber | | - |
| Carbon Black | As in Table 8 and Table 9 | 35 *41 |
| Silica | | - |
| Spindle Oil | - | 10 |
| Antiaging Agent *42 | 2 | 2 |
| Organic Acid Cobalt Salt *43 | 1 | - |
| Zinc Flower | 8 | 5 |
| Stearic Acid | 1 | 3 |
| Accelerator DZ *44 | 1 | - |

(continued)

| Formulation (part by mass) | Coating Rubber Composition for Carcass Ply | Cushion Rubber |
|---|---|---|
| Accelerator TBzTD *45 | - | 0.2 |
| Accelerator NS *46 | - | 0.8 |
| Accelerator M *47 | - | 0.5 |
| Sulfur | 5 | 3 |

[Notes]
*41: HAF(N-330), Asahi Carbon's trade name "Asahi#70" (nitrogen adsorption specific surface area: 77 m$^2$/g)
*42: N-(1,3-dimethylbutyl)-N'-phenyl-p-phenylenediamine, Ouchi Shinko Chemical Industry's trade name "Nocrac 6C"
*43: OM Group's trade name "Manobond C225" (registered trademark) (cobalt content 22.5%)
*44: N,N'-dicyclohexyl-2-benzothiazolylsulfenamide, Ouchi Shinko Chemical Industry's trade name "Nocceler DZ"
*45: Tetrabenzylthiuram disulfide, Sanshin Chemical Industry's trade name "Sanceler TBZTD"
*46: N-tert-butyl-2-benzothiazolylsulfenamide, Sanshin Chemical Industry's trade name "Sanceler NS"
*47: 2-mercaptobenzothiazole, Ouchi Shinko Chemical Industry's trade name "Nocceler M-P"

[Table 8]

# Table 8

| Coating Rubber Composition for Outermost Belt Layer | | Example | | | | | | | | | | Comparative Example | | | | | | | | | | | |
|---|---|---|---|---|---|---|---|---|---|---|---|---|---|---|---|---|---|---|---|---|---|---|---|
| | | 26 | 27 | 28 | 29 | 30 | 31 | 32 | 33 | 34 | 35 | 41 | 42 | 43 | 44 | 45 | 46 | 47 | 48 | 49 | 50 | 51 | 52 |
| Formulation (part by mass) | Natural rubber | 100 | 100 | 100 | 100 | 100 | 100 | 100 | 100 | 100 | 100 | 100 | 100 | 100 | 100 | 100 | 100 | 100 | 100 | 100 | 100 | 100 | 100 |
| | Carbon Black HAF *48 | 60 | 40 | 50 | - | - | - | - | - | - | - | 60 | - | - | - | - | 40 | 50 | - | - | - | - | - |
| | Carbon Black FEF *49 | - | - | - | 45 | - | 40 | 45 | 50 | 50 | - | - | 45 | 45 | 50 | 50 | - | - | - | - | - | - | - |
| | Carbon Black GPF *50 | - | - | - | - | 45 | - | - | - | - | 50 | - | - | - | - | - | - | - | 50 | - | - | - | - |
| | Carbon Black ISAF *51 | - | - | - | - | - | - | - | - | - | - | - | - | - | - | - | - | - | - | 50 | 50 | - | - |
| | Carbon Black SRF-LS *52 | - | - | - | - | - | - | - | - | - | - | - | - | - | - | - | - | - | - | - | - | 50 | 50 |
| | Silica *53 | - | - | - | 5 | 5 | 10 | - | - | 5 | - | - | 5 | - | - | 5 | - | - | - | - | - | - | - |
| Vulcanization Method | | 2-stage vulcani zation | 2-stage vulcani zation | 2-stage vulcani zation | 2-stage vulcani zation | 2-stage vulcani zation | 2-stage vulcani zation | 2-stage vulcani zation | 2-stage vulcani zation | 2-stage vulcani zation | 2-stage vulcani zation | 1-stage vulcani zation | 1-stage vulcani zation | 1-stage vulcani zation | 1-stage vulcani zation | 1-stage vulcani zation | 1-stage vulcani zation | 1-stage vulcani zation | 1-stage vulcani zation | 1-stage vulcani zation | 2-stage vulcani zation | 1-stage vulcani zation | 2-stage vulcan ization |
| Evaluation Results | Low Rolling Resistance | 101 | 103 | 102 | 102 | 103 | 103 | 102 | 101 | 101 | 103 | 100 | 101 | 102 | 101 | 101 | 102 | 101 | 102 | 94 | 95 | 103 | 104 |
| | Cracking Resistance after Long-Term Use | 110 | 100 | 105 | 105 | 102 | 102 | 105 | 105 | 106 | 100 | 100 | 90 | 92 | 96 | 96 | 81 | 90 | 80 | 95 | 100 | 70 | 90 |

[Notes]

*48: HAF(N-330), Asahi Carbon's trade name "Asahi #70" (nitrogen adsorption specific surface area: 77 m$^2$/g)

*49: FEF(N-550), Asahi Carbon's trade name "Asahi #60" (nitrogen adsorption specific surface area: 40 m$^2$/g)

*50: GPF(N-660), Asahi Carbon's trade name "Asahi #55" (nitrogen adsorption specific surface area: 26 m$^2$/g)

*51: ISAF(N-220), Asahi Carbon's trade name "Asahi #80" (nitrogen adsorption specific surface area: 115 m$^2$/g)

*52: SRF-LS, Tokai Carbon's trade name "Seast SP" (nitrogen adsorption specific surface area: 23 m$^2$/g)

*53: Tosoh Silica's trade name "Nipsil AQ" (BET specific surface area: 220 m$^2$/g)

[Table 9]

**Table 9**

| Coating Rubber Composition for Carcass Ply | | Example | | | Com Comparative Example | | | | | | |
|---|---|---|---|---|---|---|---|---|---|---|---|
| | | 36 | 37 | 38 | 53 | 54 | 55 | 56 | 57 | 58 | 59 |
| Formulation (part by mass) | Natural Rubber | 70 | 100 | 100 | 70 | 100 | 100 | 100 | 100 | 100 | 100 |
| | Synthetic Isoprene Rubber *54 | 30 | - | - | 30 | - | - | - | - | - | - |
| | Carbon Black HAF *48 | - | 45 | - | - | - | - | - | - | 45 | - |
| | Carbon Black FEF *49 | 45 | - | 60 | 45 | 35 | 35 | 35 | 35 | - | 60 |
| | Carbon Black GPF *50 | - | - | - | - | - | - | - | - | - | - |
| | Silica *53 | 5 | 5 | 5 | 5 | - | - | 5 | 5 | 5 | 5 |
| Vulcanization Method | | 2-stage vulcanization | 2-stage vulcanization | 2-stage vulcanization | 1-stage vulcanization | 1-stage vulcanization | 2-stage vulcanization | 1-stage vulcanization | 2-stage vulcanization | 1-stage vulcanization | 1-stage vulcanization |
| Evaluation Results | Low Rolling Resistance | 100 | 101 | 100 | 99 | 103 | 103 | 103 | 103 | 99 | 100 |
| | Cracking Resistance after Long-Term Use | 100 | 105 | 106 | 88 | 83 | 95 | 84 | 96 | 90 | 96 |
| [Notes] *48 to *50 and *53 are the same as in Table 8. *54: JSR's polyisoprene rubber (IR), trade name "IR2200" | | | | | | | | | | | |

As obvious from Table 2 and Table 3, the coating rubber compositions for outermost belt layer of Examples 1 to 14 are all better than the comparative coating rubber compositions for outermost belt layer of Comparative Examples 1 to 20 in point of tanδ and the cracking resistance after long-term use. In addition, the obtained tires of Examples 1 to 14 all had low rolling resistance and are excellent.

As obvious from Table 5 and Table 6, the coating rubber compositions for innermost belt layer of Examples 15 to 25 are all better than the comparative coating rubber compositions for innermost belt layer of Comparative Examples 21 to 40 in point of tan (and the cracking resistance after long-term use. In addition, the obtained tires of Examples 15 to 25 all had low rolling resistance and are excellent.

As obvious from Table 8 and Table 9, the coating rubber compositions for carcass ply of Examples 26 to 38 are all better than the comparative coating rubber compositions for carcass ply of Comparative Examples 41 to 59 in point of tan (and the cracking resistance after long-term use. In addition, the obtained tires of Examples 26 to 38 all had low rolling resistance and are excellent.

Industrial Applicability

According to the production method for a tire casing and a tire of the present invention, there can be obtained a tire having improved low-heat-generation property and durability, and the production method of the present invention is favorably used for production of various types of pneumatic tires, especially for pneumatic radial tires for light trucks, large-sized vehicles (for trucks, buses, construction vehicles, etc.) and others.

Description of Reference Numerals and Signs

1 Tire
2,2' Bead Core
3,3' Stiffener
4 Carcass Ply
5 Belt Portion
5a Innermost Belt Layer
5b Inside Belt Layer to Form Crossing Layer
5c Outside Belt Layer to Form Crossing Layer
5d Outermost Belt Layer
5e Innermost Belt Layer (inside belt layer to form crossing layer)
5f Outside Belt Layer to Form Crossing Layer
5g Outermost Belt Layer
6 Belt Wedge Rubber
7 Belt End Cover Rubber
7a, 7b, 7c, 7d Belt End cover Rubber of Each Belt Layer
8 Tread Portion
9, 9' Sidewall Rubber
10 Inner Liner
M Side Portion
N Bead Portion
A Tire Casing
B Precured Tread Member
CL Crown Center

**Claims**

1. A method for producing a tire casing (A) by vulcanizing a casing portion comprising a belt portion (5) composed of multiple belt layers (5a-5g), a side portion (M) and a bead portion (N), the method including at least one compounding method selected from the following (a), (b) and (c) :

   (a) in which carbon black having a nitrogen adsorption specific surface area of from 25 to 99 m²/g as defined in JIS K 6217-2:2001 is incorporated in a coating rubber composition for the outermost belt layer (5d,5g) in the belt portion (5), in an amount of from 30 to 60 parts by mass per 100 parts by mass of the rubber component therein;

(b) in which the belt portion (5) is composed of at least three belt layers (5a-5g), and carbon black having a nitrogen adsorption specific surface area of from 25 to 99 m$^2$/g as defined in JIS K 6217-2:2001 is incorporated in a coating rubber composition for at least one belt layer in the belt portion (5), in an amount of from 40 to 60 parts by mass per 100 parts by mass of the rubber component therein;

(c) in which the casing portion includes a carcass ply (4), and carbon black having a nitrogen adsorption specific surface area of from 25 to 90 m$^2$/g as defined in JIS K 6217-2:2001 is incorporated in a coating rubber composition for the carcass ply (4), in an amount of from 40 to 60 parts by mass per 100 parts by mass of the rubber component therein; and wherein the vulcanization method for the casing portion is a method of surrounding the casing portion from the outside by the use of the vulcanization mold, and the casing portion is vulcanized and molded in such a manner that the bead portion (N) side of the casing portion is heated by a first heating means, the belt portion (5) side of the casing portion is heated by a second heating means, and the quantity of heat per unit volume to be given to the belt portion (5) side by the second heating means is smaller than the quantity of heat per unit volume to be given to the bead portion (N) side by the first heating means.

2. A method for producing a tire (1) by forming a tire casing (A) according to the method of claim 1, vulcanizing a tread member (B) having at least a tread portion (8) to form a precured tread member (B), and thereafter bonding the tire casing (A) and the precured tread member (B) together and integrally vulcanizing and molding them into a tire (1).

3. The method for producing a tire casing (A) according to claim 1 or a tire (1) according to claim 2, wherein the ultimate temperature of the outermost belt layer (5d,5g) during vulcanization of the casing portion is from 110 to 160°C, and the ultimate temperature of the bead portion (N) is from 125 to 180°C, and the ultimate temperature at the latest vulcanization point of the outermost belt layer (5d,5g) is lower by from 2 to 25°C than the ultimate temperature at the latest vulcanization point of the bead portion (N).

4. The method for producing a tire (1) according to claim 2 or 3, wherein the ultimate temperature at the latest vulcanization point of the outermost belt layer (5d,5g) in bonding the tire casing (A) and the precured tread member (B) together and vulcanizing them is lower than the ultimate temperature at the latest vulcanization point of the outermost belt layer (5d,5g) in vulcanizing the casing portion.

5. The method for producing a tire casing (A) according to claim 1 or a tire (1) according to claim 2, wherein the belt portion (5) is composed of at least 3 belt layers (5a-5g), and the coating rubber composition is used for at least the innermost belt layer (5a,5e) in the tire radial direction of the belt layers (5a-5g).

6. The method for producing a tire casing (A) or tire (1) according to claim 5, wherein the ultimate temperature of the innermost belt layer (5a,5e) during vulcanization of the casing portion is from 110 to 160°C, and the ultimate temperature of the bead portion (N) is from 125 to 180°C, and the ultimate temperature at the latest vulcanization point of the innermost belt layer (5a,5e) is lower by from 2 to 25°C than the ultimate temperature at the latest vulcanization point of the bead portion (N).

7. The method for producing a tire (1) according to claim 5 or 6, wherein the ultimate temperature at the latest vulcanization point of the innermost belt layer (5a,5e) in bonding the tire casing (A) and the precured tread member (B) together and vulcanizing them is lower than the ultimate temperature at the latest vulcanization point of the innermost belt layer (5a,5e) in vulcanizing the casing portion.

8. The method for producing a tire (1) according to claim 2 or 3, wherein the ultimate temperature of the carcass ply (4) at the crown center position in bonding the tire casing (A) and the precured tread member (B) together and vulcanizing them is lower than the ultimate temperature of the carcass ply (4) at the crown center position in vulcanizing the casing portion.

9. The method for producing a tire (1) according to any of claims 2 to 8, wherein the tire casing (A) and the precured tread member (B) are bonded via an unvulcanized cushion rubber and vulcanized and molded.

10. The method for producing a tire casing (A) according to any of claims 1,3, 5 or 6 or a tire (1) according to any of claims 2 to 9, wherein silica is incorporated in the coating rubber composition in an amount of at most 10 parts by mass per 100 parts by mass of the rubber component in the composition.

11. The method for producing a tire casing (A) according to any of claims 1, 3 or 10 or a tire (1) according to any of claims 2 to 4, 9 and 10, wherein the loss tangent (tan$\delta$) of the coating rubber composition for the outermost belt layer (5d, 5g) in the belt portion (5), under an initial load of 160 g and at a frequency of 52 Hz, a strain of 2% and a measurement temperature of 25°C is at most 0.17.

12. The method for producing a tire casing (A) according to any of claims 5, 6 or 10 or a tire according to any of claims 5 to 7, 9 and 10, wherein the loss tangent (tan$\delta$) of the coating rubber composition for at least the innermost belt layer (5a,5e) in the tire radial direction of the belt portion (5), under an initial load of 160 g and at a frequency of 52 Hz, a strain of 2% and a measurement temperature of 25°C is at most 0.17.

13. The method for producing a tire casing (A) according to any of claims 1, 3 or 10 or a tire (1) according to any of claims 2 to 4 and 8 to 10, wherein the loss tangent (tan$\delta$) of the coating rubber composition for the carcass ply (4), under an initial load of 160 g and at a frequency of 52 Hz, a strain of 2% and a measurement temperature of 25°C is at most 0.17.

**Patentansprüche**

1. Verfahren zum Herstellen eines Reifenmantels (A) durch Vulkanisieren eines Mantelabschnitts, der einen Gürtelabschnitt (5) umfasst, der aus mehreren Gürtelschichten (5a bis 5g), einem Seitenabschnitt (M) und einem Wulstabschnitt (N) besteht, wobei das Verfahren mindestens ein aus den folgenden (a), (b) und (c) ausgewähltes Kompoundierungsverfahren aufweist:

(a) in dem Ruß mit einem stickstoffadsorptionsspezifischen Oberflächenbereich von 25 bis 99 m$^2$/g, wie in JIS K 6217-2:2001 definiert, in eine Gummimischungsbeschichtung für die äußerste Gürtelschicht (5d, 5g) in dem Gürtelabschnitt (5) in einer Menge von 30 bis 60 Massenteilen je 100 Massenteile der Gummikomponente aufgenommen wird;
(b) in dem der Gürtelabschnitt (5) aus mindestens drei Gürtelschichten (5a bis 5g) besteht und Ruß mit einem stickstoffadsorptionsspezifischen Oberflächenbereich von 25 bis 99 m$^2$/g, wie in JIS K 6217-2:2001 definiert, in eine Gummimischungsbeschichtung für mindestens eine Gürtelschicht in dem Gürtelabschnitt (5) in einer Menge von 40 bis 60 Massenteilen je 100 Massenteile der Gummikomponente aufgenommen wird;
(c) in dem der Mantelabschnitt eine Karkassenlage (4) aufweist und Ruß mit einem stickstoffadsorptionsspezifischen Oberflächenbereich von 25 bis 90 m$^2$/g, wie in JIS K 6217-2:2001 definiert, in eine Gummimischungsbeschichtung für die Karkassenlage (4) in einer Menge von 40 bis 60 Massenteilen je 100 Massenteile der Gummikomponente darin aufgenommen wird; und wobei das Vulkanisierungsverfahren für den Mantelabschnitt ein Verfahren ist, das darin besteht, den Mantelabschnitt von der Außenseite durch den Einsatz der Vulkanisierungsform zu umschließen, und der Mantelabschnitt in einer solchen Weise vulkanisiert und geformt wird, dass die Seite des Wulstabschnitts (N) des Mantelabschnitts durch ein erstes Erwärmungsmittel erwärmt wird, wobei die Seite des Gürtelabschnitts (5) des Mantelabschnitts durch ein zweites Erwärmungsmittel erwärmt wird und die Wärmemenge je Volumeneinheit, die durch das zweite Erwärmungsmittel der Seite des Gürtelabschnitts (5) hingeführt wird, kleiner als die Wärmemenge je Volumeneinheit ist, die der Seite des Wulstabschnitts (N) durch das erste Erwärmungsmittel hingeführt wird.

2. Verfahren zum Herstellen eines Reifens (1) durch Formen eines Reifenmantels (A) gemäß dem Verfahren nach Anspruch 1, Vulkanisieren eines Laufflächenelements (B) mit mindestens einem Laufflächenabschnitt (8), um ein vorvulkanisiertes Laufflächenelement (B) zu formen und danach Zusammenfügen des Reifenmantels (A) und des vorvulkanisierten Laufflächenelements (B) und ganzheitliches Vulkanisieren und Formen von ihnen zu einem Reifen (1).

3. Verfahren zum Herstellen eines Reifenmantels (A) nach Anspruch 1 oder eines Reifens (1) nach Anspruch 2, wobei die Endtemperatur der äußersten Gürtelschicht (5d, 5g) während der Vulkanisierung des Mantelabschnitts von 110 bis 160 °C geht und die Endtemperatur des Wulstabschnitts (N) von 125 bis 180 °C geht und die Endtemperatur bei dem letzten Vulkanisierungspunkt der äußersten Gürtelschicht (5d, 5g) um 2 bis 25 °C niedriger als die Endtemperatur bei dem letzten Vulkanisierungspunkt des Wulstabschnitts (N) ist.

4. Verfahren zum Herstellen eines Reifens (1) nach Anspruch 2 oder 3, wobei die Endtemperatur bei dem letzten Vulkanisierungspunkt der äußersten Gürtelschicht (5d, 5g) beim Zusammenfügen des Reifenmantels (A) und des vorvulkanisierten Laufflächenelements (B) und Vulkanisieren von ihnen niedriger als die Endtemperatur bei dem letzten Vulkanisierungspunkt der äußersten Gürtelschicht (5d, 5g) beim Vulkanisieren des Mantelabschnitts ist.

**5.** Verfahren zum Herstellen eines Reifenmantels (A) nach Anspruch 1 oder eines Reifens (1) nach Anspruch 2, wobei der Gürtelabschnitt (5) aus mindestens 3 Gürtelschichten (5a bis 5g) besteht und die Gummimischungsbeschichtung für mindestens die innerste Gürtelschicht (5a, 5e) in der Reifenradialrichtung der Gürtelschichten (5a bis 5g) verwendet wird.

**6.** Verfahren zum Herstellen eines Reifenmantels (A) oder eines Reifens (1) nach Anspruch 5, wobei die Endtemperatur der innersten Gürtelschicht (5a, 5e) während der Vulkanisierung des Mantelabschnitts von 110 bis 160 °C geht und die Endtemperatur des Wulstabschnitts (N) von 125 bis 180 °C geht und die Endtemperatur bei dem letzten Vulkanisierungspunkt der innersten Gürtelschicht (5a, 5e) um 2 bis 25 °C niedriger als die Endtemperatur bei dem letzten Vulkanisierungspunkt des Wulstabschnitts (N) ist.

**7.** Verfahren zum Herstellen eines Reifens (1) nach Anspruch 5 oder 6, wobei die Endtemperatur bei dem letzten Vulkanisierungspunkt der innersten Gürtelschicht (5a, 5e) beim Zusammenfügen des Reifenmantels (A) und des vorvulkanisierten Laufflächenelements (B) und Vulkanisieren von ihnen niedriger als die Endtemperatur bei dem letzten Vulkanisierungspunkt der innersten Gürtelschicht (5a, 5e) beim Vulkanisieren des Mantelabschnitts ist.

**8.** Verfahren zum Herstellen eines Reifens (1) nach Anspruch 2 oder 3, wobei die Endtemperatur der Karkassenlage (4) bei der Position der Laufflächenkrone beim Zusammenfügen des Reifenmantels (A) und des vorvulkanisierten Laufflächenelements (B) und Vulkanisieren von ihnen niedriger als die Endtemperatur der Karkassenlage (4) bei der Position der Laufflächenkrone beim Vulkanisieren des Mantelabschnitts ist.

**9.** Verfahren zum Herstellen eines Reifens (1) nach einem der Ansprüche 2 bis 8, wobei der Reifenmantel (A) und das vorvulkanisierte Laufflächenelement (B) mittels eines nicht vulkanisierten Dämpfungsgummis verbunden und vulkanisiert und geformt werden.

**10.** Verfahren zum Herstellen eines Reifenmantels (A) nach einem der Ansprüche 1, 3, 5 oder 6 oder eines Reifens (1) nach einem der Ansprüche 2 bis 9, wobei Siliziumdioxid in die Gummimischungsbeschichtung in einer Menge von maximal 10 Massenteilen je 100 Massenteile der Gummikomponente in der Zusammensetzung aufgenommen wird.

**11.** Verfahren zum Herstellen eines Reifenmantels (A) nach einem der Ansprüche 1, 3 oder 10 oder eines Reifens (1) nach einem der Ansprüche 2 bis 4, 9 und 10, wobei der Verlustfaktor (tan$\delta$) der Gummimischungsbeschichtung für die äußerste Gürtelschicht (5d, 5g) in dem Gürtelabschnitt (5) unter einer Anfangslast von 160 g und bei einer Frequenz von 52 Hz, einer Dehnung von 2 % und einer Messtemperatur von 25 °C höchstens 0,17 beträgt.

**12.** Verfahren zum Herstellen eines Reifenmantels (A) nach einem der Ansprüche 5, 6 oder 10 oder eines Reifens nach einem der Ansprüche 5 bis 7, 9 und 10, wobei der Verlustfaktor (tan$\delta$) der Gummimischungsbeschichtung für mindestens die innerste Gürtelschicht (5a, 5e) in der Reifenradialrichtung des Gürtelabschnitts (5) unter einer Anfangslast von 160 g und bei einer Frequenz von 52 Hz, einer Dehnung von 2 % und einer Messtemperatur von 25 °C höchstens 0,17 beträgt.

**13.** Verfahren zum Herstellen eines Reifenmantels (A) nach einem der Ansprüche 1, 3 oder 10 oder eines Reifens (1) nach einem der Ansprüche 2 bis 4 und 8 bis 10, wobei der Verlustfaktor (tan$\delta$) der Gummimischungsbeschichtung für die Karkassenlage (4) unter einer Anfangslast von 160 g und bei einer Frequenz von 52 Hz, einer Dehnung von 2 % und einer Messtemperatur von 25 °C höchstens 0,17 beträgt.

**Revendications**

**1.** Procédé de production d'une enveloppe de pneumatique (A) par vulcanisation d'une partie enveloppe comprenant une partie ceinture (5) composée de plusieurs couches de ceinture (5a à 5g), une partie côté (M) et une partie talon (N), ledit procédé comprenant au moins un procédé de mélangeage sélectionné parmi les étapes (a), (b) et (c) suivantes :

(a) où du noir de carbone présentant une surface spécifique d'adsorption d'azote comprise entre 25 et 99 m$^2$/g, comme cela est défini dans JIS K 6217-2:2001, est incorporé dans une composition de caoutchouc de revêtement pour la couche de ceinture la plus extérieure (5d, 5g) de la partie ceinture (5), en une quantité comprise entre 30 et 60 parties en masse pour 100 parties en masse du composant de caoutchouc présent ;
(b) où la partie ceinture (5) est composée d'au moins trois couches de ceinture (5a à 5g), et du noir de carbone présentant une surface spécifique d'adsorption d'azote comprise entre 25 et 99 m²/g, comme cela est défini dans JIS K 6217-2:2001, est incorporé dans une composition de caoutchouc de revêtement pour au moins une couche de ceinture de la partie ceinture (5), en une quantité comprise entre 40 et 60 parties en masse pour 100 parties en masse du composant de caoutchouc présent ;

(c) où la partie enveloppe comprend une nappe de carcasse (4), et du noir de carbone présentant une surface spécifique d'adsorption d'azote comprise entre 25 et 90 m²/g, comme cela est défini dans JIS K 6217-2:2001, est incorporé dans une composition de caoutchouc de revêtement pour la nappe de carcasse (4), en une quantité comprise entre 40 et 60 parties en masse pour 100 parties en masse du composant de caoutchouc présent ; et

dans lequel le procédé de vulcanisation destiné à la partie enveloppe est un procédé de ceinturage de la partie enveloppe par l'extérieur grâce à l'utilisation du moule de vulcanisation, et la partie enveloppe est vulcanisée et moulée de telle manière que le côté de la partie talon (N) de la partie enveloppe est chauffé grâce à un premier moyen de chauffage, le côté de la partie ceinture (5) de la partie enveloppe est chauffé grâce à un deuxième moyen de chauffage, et la quantité de chaleur par unité de volume qui doit être fournie au côté de la partie ceinture (5) grâce au deuxième moyen de chauffage est inférieure à la quantité de chaleur par unité de volume qui doit être fournie au côté de la partie talon (N) grâce au premier moyen de chauffage.

2. Procédé de production d'un pneumatique (1) grâce aux étapes consistant à former une enveloppe de pneumatique (A) conformément au procédé selon la revendication 1, vulcaniser un élément formant bande de roulement (B) présentant au moins une partie bande de roulement (8) afin de former un élément formant bande de roulement (B) prédurci, et lier ensuite ensemble l'enveloppe de pneumatique (A) et l'élément formant bande de roulement (B) prédurci et les vulcaniser et les mouler d'un seul tenant pour en faire un pneumatique (1).

3. Procédé de production d'une enveloppe de pneumatique (A) selon la revendication 1 ou d'un pneumatique (1) selon la revendication 2, dans lequel la température finale de la couche de ceinture la plus extérieure (5d, 5g) pendant la vulcanisation de la partie enveloppe est comprise entre 110 et 160°C, et la température finale de la partie talon (N) est comprise entre 125 et 180°C, et la température finale au niveau du point de vulcanisation le plus tardif de la couche de ceinture la plus extérieure (5d, 5g) est inférieure, à raison d'une valeur comprise entre 2 et 25°C, à la température finale au niveau du point de vulcanisation le plus tardif de la partie talon (N).

4. Procédé de production d'un pneumatique (1) selon la revendication 2 ou 3, dans lequel la température finale au niveau du point du vulcanisation le plus tardif de la couche de ceinture la plus extérieure (5d, 5g) lors des étapes consistant à lier ensemble l'enveloppe de pneumatique (A) et l'élément formant bande de roulement (B) prédurci et les vulcaniser est inférieure à la température finale au niveau du point de vulcanisation le plus tardif de la couche de ceinture la plus extérieure (5d, 5g) lors de l'étape consistant à vulcaniser la partie enveloppe.

5. Procédé de production d'une enveloppe de pneumatique (A) selon la revendication 1 ou d'un pneumatique (1) selon la revendication 2, dans lequel la partie ceinture (5) est composée d'au moins 3 couches de ceinture (5a à 5g), et la composition de caoutchouc de revêtement est utilisée pour au moins la couche de ceinture la plus intérieure (5a, 5e) dans la direction radiale de pneumatique des couches de ceinture (5a à 5g).

6. Procédé de production d'une enveloppe de pneumatique (A) ou d'un pneumatique (1) selon la revendication 5, dans lequel la température finale de la couche de ceinture la plus intérieure (5a, 5e) pendant la vulcanisation de la partie enveloppe est comprise entre 110 et 160°C, et la température finale de la partie talon (N) est comprise entre 125 et 180°C, et la température finale au niveau du point de vulcanisation le plus tardif de la couche de ceinture la plus intérieure (5a, 5e) est inférieure, d'une valeur comprise entre 2 et 25°C, à la température finale au niveau du point de vulcanisation le plus tardif de la partie talon (N).

7. Procédé de production d'un pneumatique (1) selon la revendication 5 ou 6, dans lequel la température finale au niveau du point de vulcanisation le plus tardif de la couche de ceinture la plus intérieure (5a, 5e) lors des étapes consistant à lier ensemble l'enveloppe de pneumatique (A) et l'élément formant bande de roulement (B) prédurci et les vulcaniser est inférieure à la température finale au niveau du point de vulcanisation le plus tardif de la couche de ceinture la plus intérieure (5a, 5e) lors de l'étape consistant à vulcaniser la partie enveloppe.

8. Procédé de production d'un pneumatique (1) selon la revendication 2 ou 3, dans lequel la température finale de la nappe de carcasse (4) à la position du centre de la bande de roulement lors des étapes consistant à lier ensemble l'enveloppe de pneumatique (A) et l'élément formant bande de roulement (B) prédurci et les vulcaniser est inférieure

33

à la température finale de la nappe de carcasse (4) à la position du centre de la bande de roulement lors de l'étape consistant à vulcaniser la partie enveloppe.

9. Procédé de production d'un pneumatique (1) selon l'une quelconque des revendications 2 à 8, dans lequel l'enveloppe de pneumatique (A) et l'élément formant bande de roulement (B) prédurci sont liés via un coussin non vulcanisé de caoutchouc puis vulcanisés et moulés.

10. Procédé de production d'une enveloppe de pneumatique (A) selon l'une quelconque des revendications 1, 3, 5 ou 6 ou d'un pneumatique (1) selon l'une quelconque des revendications 2 à 9, dans lequel de la silice est incorporée dans la composition de caoutchouc de revêtement en une quantité d'au plus 10 parties en masse pour 100 parties en masse du composant de caoutchouc de la composition.

11. Procédé de production d'une enveloppe de pneumatique (A) selon l'une quelconque des revendications 1, 3 ou 10 ou d'un pneumatique (1) selon l'une quelconque des revendications 2 à 4, 9 et 10, dans lequel le facteur de perte (tan$\delta$) de la composition de caoutchouc de revêtement pour la couche de ceinture la plus extérieure (5d, 5g) de la partie ceinture (5), sous une charge initiale de 160 g et à une fréquence de 52 Hz, une déformation de 2% et une température de mesure de 25°C, est d'au plus 0,17.

12. Procédé de production d'une enveloppe de pneumatique (A) selon l'une quelconque des revendications 5, 6 ou 10, ou d'un pneumatique selon l'une quelconque des revendications 5 à 7, 9 et 10, dans lequel le facteur de perte (tan$\delta$) de la composition de caoutchouc de revêtement pour au moins la couche de ceinture la plus intérieure (5a, 5e) dans la direction radiale de pneumatique de la partie ceinture (5), sous une charge initiale de 160 g et à une fréquence de 52 Hz, une déformation de 2% et une température de mesure de 25°C, est d'au plus 0,17.

13. Procédé de production d'une enveloppe de pneumatique (A) selon l'une quelconque des revendications 1, 3 ou 10 ou d'un pneumatique (1) selon l'une quelconque des revendications 2 à 4 et 8 à 10, dans lequel le facteur de perte (tan$\delta$) de la composition de caoutchouc de revêtement pour la nappe de carcasse (4), sous une charge initiale de 160 g et à une fréquence de 52 Hz, une déformation de 2% et une température de mesure de 25°C, est d'au plus 0,17.

Fig. 1

Fig. 2

Fig. 3

Fig. 4

Fig. 5

**EP 2 633 985 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009151839 A
- EP 0909788 A
- JP 2002069237 B
- US 2010113684 A
- JP 2010120530 A
- JP 2007211152 A
- JP 2009137541 A
- JP 8258179 A
- JP 2000079640 A
- JP 2006111072 A